(19) Europäisches Patentamt
European Patent Office
Office européen des brevets

(11) EP 4 406 436 A1

(12) **EUROPEAN PATENT APPLICATION**

(43) Date of publication:
**31.07.2024 Bulletin 2024/31**

(21) Application number: **23153134.4**

(22) Date of filing: **24.01.2023**

(51) International Patent Classification (IPC):
***A24F 40/57*** *(2020.01)* ***G05D 23/24*** *(2006.01)*

(52) Cooperative Patent Classification (CPC):
**A24F 40/57; G05D 23/2401;** A24F 40/20

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(71) Applicant: **IMPERIAL TOBACCO LIMITED**
**Bristol BS3 2LL (GB)**

(72) Inventor: **The designation of the inventor has not yet been filed**

(74) Representative: **Mewburn Ellis LLP**
**Aurora Building**
**Counterslip**
**Bristol BS1 6BX (GB)**

(54) **AEROSOL GENERATING APPARATUS**

(57) An aerosol generation apparatus comprises a heating element, an electrical power source 602, and a processor 600. The heating element is configured produce heat from a flow of electrical current therethrough and heat an aerosol precursor. The processor is configured to enable and disable the supply of the electrical current to the heating element by providing a control signal to a switch 604, 606 and perform a temperature control routine. The temperature control routine comprises enabling the supply of the electrical current from the electrical power source to the heating element such that the electrical current flows through the heating element, waiting for a predetermined settling time, receiving a sample current through the heating element and a sample voltage across the heating element, and determining an instant temperature of the heating element from the sample current and the sample voltage.

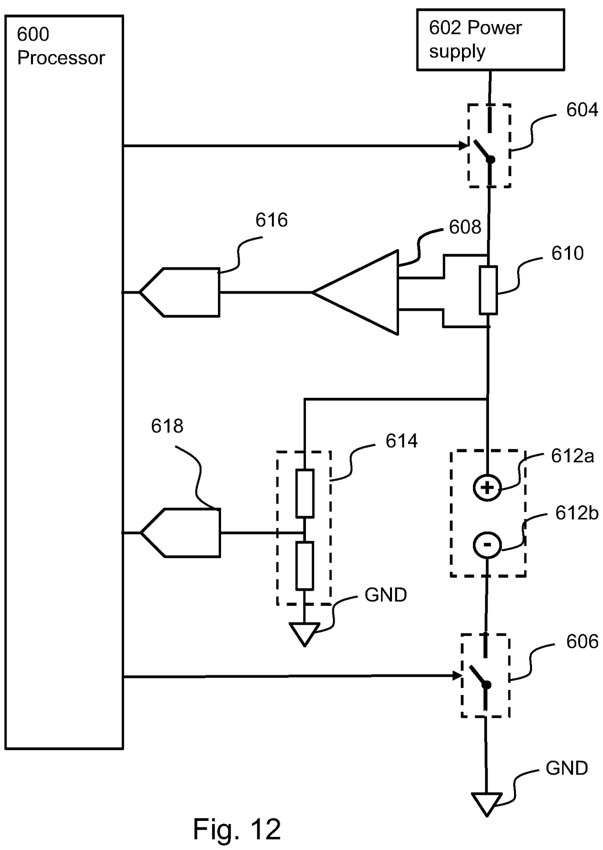


Fig. 12

EP 4 406 436 A1

## Description

## FIELD

The present disclosure relates to an aerosol generating apparatus and to a method of monitoring temperature of a heating element in an aerosol generation apparatus.

## BACKGROUND

A typical aerosol generating apparatus may comprise a power supply, an aerosol generating unit that is driven by the power supply, an aerosol precursor, which in use is aerosolised by the aerosol generating unit to generate an aerosol, and a delivery system for delivery of the aerosol to a user.

A heating element, which receives electrical current from the power supply, is typically provided to heat the aerosol precursor for generating the aerosol. It is important to provide accurate control of the temperature of the heating element to ensure that the aerosol precursor is not overheated and to comply with safety regulations which must be met by the aerosol generating apparatus.

In some conventional aerosol generating apparatuses, the temperature of the heating element may be monitored using temperature sensors. For example, EP3711569 describes a heating element comprising a temperature sensing track for sensing the temperature of an HNB consumable. Other examples may use temperature sensors such as thermocouples or thermistors.

However, in these examples the temperature sensor(s) must be positioned on or near to the heating element. This takes up space in the apparatus and increases component costs and manufacturing complexity. Moreover, temperature sensors such as thermocouples and sensing tracks typically take a certain amount of time to respond to the increasing or decreasing temperature of the heating element (this may be referred to as thermal lag). Therefore, it can be difficult to accurately control the temperature of the heating element in these examples because the temperature of the heating element may change more quickly than the temperature can be sensed and any consequent adjustments made.

The heating element in a typical aerosol generating apparatus may have an electrical resistance which changes with the temperature of the heating element. However, directly measuring the resistance of the heating element to monitor the temperature can be impractical. It is generally more convenient to monitor the power consumption of the heating element. However, a drawback of known aerosol generating apparatuses is that the power supply (for example a Lithium-Ion battery) may provide a variable voltage (for example the voltage provided by a Lithium-Ion battery may vary according to a state of charge of the Lithium-Ion battery). Therefore, simply monitoring the power consumption of the heating element for sensing the temperature of the heating element can be inaccurate because the power consumption is dependent on the supply voltage which may vary owing to the variations in the power supply.

In some aerosol generating apparatuses the power supply may be regulated to provide a constant voltage. However, the inclusion of a regulator for regulating the power supply can increase the complexity of the apparatus and introduce inefficiencies and undesirable power loss.

In light of these considerations, the present invention provides an aerosol generating apparatus and a method of monitoring the temperature of a heating element which facilitates more accurate temperature control than in a conventional aerosol generating apparatus.

## SUMMARY

The present disclosure provides an aerosol generation apparatus comprising:

a heating element configured to heat an aerosol precursor wherein the heating element configured to produce heat from a flow of electrical current therethrough,
an electrical power source for supplying the electrical current to the heating element, wherein the electrical power source is connected to the heating element via a switch,
a processor configured to enable and disable the supply of the electrical current to the heating element by providing a control signal to the switch;
wherein the processor is configured to perform a temperature control routine comprising:

enabling the supply of the electrical current from the electrical power source to the heating element such that the electrical current flows through the heating element,
waiting for a predetermined settling time,
receiving a sample current through the heating element and a sample voltage across the heating element, and
determining an instant temperature of the heating element from the sample current and the sample voltage.

Advantageously, waiting for a predetermined settling time before sampling the instant temperature of the heating element may lead to more accurate temperature determination and therefore more accurate temperature control of the heating element.

The predetermined settling time may be configured to enable the sample current and the sample voltage to reach a steady-state after the supply of the electrical current from the electrical power source is enabled.

Enabling the supply of electrical current to the heating element may introduce a step-change into the electrical current flowing through the heating element. This can cause transients in the electrical circuitry as a result of overshoots or instabilities in response to the step-change. Moreover, some electrical components involved in sampling the temperature of the heating element have a finite bandwidth and take a certain amount of time to reach a final steady-state in response to the step-change.

This is especially true when the electrical circuit comprises amplifiers (e.g. a current sense amplifier) which generally have an associated slew rate. Therefore, by waiting for the predetermined settling time before calculating the instant temperature, the measured current flowing through the heating element and the measured voltage across the heating element have time to settle to a steady-state giving a more accurate calculation of the heating element resistance and/or power consumption.

Moreover, by introducing the predetermined settling time, lower bandwidth electrical components with lower frequency capabilities may be used to monitor the temperature of the heating element, thus decreasing the overall manufacturing costs and design complexity of the apparatus.

For example, the predetermined settling time may be 100us. The present inventors have found that introducing a delay of this length provides enough time for the electrical signals to settle for accurate temperature monitoring of the heating element while maintaining the temperature of the heating element at a steady level around the target temperature. When the supply of electrical current from the electrical power source to the heating element is enabled, the temperature of the heating element may begin to increase during the predetermined settling time. Therefore, by ensuring that the predetermined settling time is suitably short, the temperature of the heating element may be maintained closer to the target temperature than if the predetermined settling time were too long which could cause the instant temperature of the heating element to increase beyond the target temperature during the predetermined settling time.

In some examples, the processor may be configured to perform the temperature control routine upon receipt of a trigger signal. For example, the processor may be configured to determine if the instant temperature of the heating element is over the target temperature when a user takes a puff of the aerosol generation apparatus, or after the aerosol generation apparatus has been switched on for a predetermined period of time.

However, in other examples, the processor may be configured to perform the temperature control routine periodically to maintain the temperature of the heating element at or near to the target temperature.

The processor may be configured to perform the temperature control routine periodically at regular intervals given by a predetermined sampling period. The predetermined sampling period (in seconds) may be defined by a predetermined sampling rate of the processor (in samples per second, or Hz).

The predetermined settling time may be smaller than the predetermined sampling period. Therefore, the instant temperature of the heating element may be sampled and optionally adjusted within one of the regular intervals.

The predetermined settling time may be equal to or less than 40% of the predetermined sampling period, more preferably less than 30% of the predetermined sampling period. By ensuring that the predetermined settling time is equal to or less than 40% of each sampling period, the remaining portion of each sampling period may be used to make temperature adjustments to the heating element. This is particularly useful if the instant temperature of the heating element is determined to be higher than the target temperature because the processor may disable the supply of the electrical current to the heating element and the remaining portion of the sampling period may then be used to allow the heating element to cool down before the supply of the electrical current to the heating element is enabled again in a next sampling period.

For example, the predetermined sampling period may be 500us - 5ms, more preferably 800us - 2ms. The present inventors have found that sampling the instant temperature (and enabling or disabling the supply of the electrical current to the heating element) at this rate leads to more accurate control of the heating element temperature compared to if the instant temperature were sampled less often. This is because the heating element has less time to heat up or cool down between samples, thus reducing the amount of any deviations of the temperature of the heating element from the target temperature between samples.

The predetermined sampling period may be shorter than a minimum time for the temperature of the heating element to increase by 1 °C when the electrical current is flowing therethrough. In other words, the sampling rate (Hz, i.e, samples per second) may be higher than the maximum heating rate (°C/s) of the heating element.

The minimum time for the temperature of the heating element to increase by 1°C may be measured in lab conditions in surroundings at room temperature wherein the heating element positioned in free space (i.e. not submerged in or in thermal contact with an aerosol precursor). The temperature of the heating element may increase non-linearly when the electrical current is flowing therethrough. For example, the temperature may increase quickly over a first temperature range and then more slowly until a maximum temperature of the heating element is reached. The minimum time for the temperature of the heating element to increase by 1°C is intended to refer to the shortest observed time for the heating element to increase by 1 °C within an operating temperature range of 10°C to 500°C.

The minimum time for the temperature of the heating element to increase by 1 °C may depend upon a nominal electrical resistance of the heating element. For example, the minimum time for the temperature of the heating element to increase by 1 ° may be between 5ms and 60ms.

By ensuring that the temperature of the heating element is sampled at a rate (in samples per second) greater than a heating rate (in 1°C per second), the temperature control may be more accurate than if the temperature were sampled more slowly.

Preferably, the predetermined sampling period may be less than 25%, more preferably less than 10% of the minimum time for the temperature of the heating element to increase by 1°C when the electrical current is flowing therethrough. In this way, smaller incremental changes may be made to the temperature of the heating element (i.e. the supply of electrical current to the heating element may be enabled and disabled for shorter periods of time) than if a lower sampling rate were used, leading to more precise adjustments and temperature control of the heating element.

As mentioned above the aerosol generation apparatus may comprise a current sense amplifier for measuring the sample current. The current sense amplifier may have an amplifier settling time which determines the response time of the current sense amplifier to a step change in the electrical current flowing through the heating element.

The settling time (Ts) may be considered as the time it takes the output of an amplifier to respond to a step change of an input to the amplifier and come into, and remain within, a defined error band, as measured relative to a 50% point of the input pulse. The error band may be a percentage of the step change in voltage output, e.g. 0.1%, 0.05%, 0.01%, etc. Some Current Sense Amplifier (CSA) manufacturers may define settling time (Ts) as the time it takes for the output of the amplifier to settle to within 1% of the maximum output following a step change in input voltage. Others define a -3db bandwidth from which a settling time may be derived, while others may simply provide a datasheet showing a typical step change oscilloscope trace, from which an appropriate Ts value may be derived.

In the following description, the settling time may be taken to mean the time for the output of a current sense amplifier to reach at least 95% of the maximum output in response to a step change in input voltage. Of course, the skilled reader would understand that any appropriate method of measuring settling time may be used so long as the settling time represents the time of the output of the amplifier to settle in response to a step-change.

The predetermined settling time may be longer than the amplifier settling time. Preferably, the predetermined settling time is 5% longer, more preferably 10% longer than the amplifier settling time. By implementing a predetermined settling time which is longer than the amplifier settling time the apparatus is more resilient to manufacturing tolerances and changes to the electrical components. For example, if a particular current sense amplifier is not available during manufacture, a different current sense amplifier may be fitted instead which may have a different settling time.

As mentioned above, the processor may be configured to enable and disable the supply of electrical current from the power supply to the heating element via a switch. In this case the temperature control routine may comprise disabling the supply of electrical current from the power supply to the heating element (i.e., turning the heating element off) if the instant temperature is above the target temperature.

The temperature control routine may comprise: first determining if the supply of electrical current to the heating element is already enabled or disabled before enabling the supply of the electrical current to the heating element, and if the heating element is already on, omitting the enabling of the supply of the electrical current to the heating element and omitting the waiting for the predetermined settling time.

In other words, the temperature control routine may comprise:

> determining if the supply of the electrical current to the heating element is already enabled or already disabled, and
> if the supply of the electrical current to the heating element is already disabled: enabling the supply of the electrical current to the heating element, waiting for a predetermined settling time, and monitoring the instant temperature of the heating element; and
> if the supply of the electrical current to the heating element is already enabled: monitoring the instant temperature of the heating element.

However, in some examples, the temperature control routine may comprise waiting for the predetermined settling time in both cases, i.e. irrespective of whether the supply of electrical current to the heating element is already enabled or already disabled. This may be useful for ensuring that the instant temperature of the heating element is sampled at regular intervals i.e. at the same point during each sampling period.

The processor may be configured to determine if the supply of electrical current to the heating element is already enabled or already disabled by storing a most recent status or flag which is toggled whenever the processor enables or disables the supply of electrical current to the heating element. In other examples, the processor may use the sample current or the sample voltage to determine if the electrical current is flowing through the heating element.

Determining the instant temperature of the heating element from the sample current and the sample voltage may comprise: comparing the sample voltage and the sample current to a calibration temperature table, and determining from the comparison if the instant temperature of the heating element is higher or lower than a target temperature.

Comparing the sample current and the sample voltage to a calibration temperature table facilitates more accurate determination of whether the heating element has reached and/or exceeded a target temperature without directly measuring the temperature. Since changes in the sample current and sample voltage can be measured quickly (i.e. without accounting for thermal lag and waiting for temperature sensors to heat up) more accurate control of the temperature of the heating element may be implemented.

Moreover, by comparing both the sample current and the sample voltage to the calibration temperature table, the temperature of the heating element may be monitored accurately even if the voltage supplied by the electrical power source is not constant. This is because changes (e.g. a decrease) observed in the sample voltage owing to variations in the voltage supplied by the electrical power source would also result in a corresponding change (e.g. a decrease) in the sample current and may be accounted for. In contrast, changes observed in the sample voltage which do not result in a corresponding change in the sample current may be attributed to a change in the resistance, and therefore the temperature, of the heating element. Accordingly, by monitoring the instant temperature of the heating element in this way, an unregulated electrical power source which, may be used to supply the electrical current to the heating element, thus reducing the cost and complexity of the apparatus and avoiding the need for unnecessary voltage regulation.

The electrical power source may be a variable voltage power source configured to provide DC electrical power to the heating element, wherein the DC electrical power may have a variable voltage. Herein, "variable voltage" is intended to refer to a steady-state (DC) signal (i.e. as opposed to an AC signal) which has a steady-state (DC) voltage (and a steady-state (DC) current), but wherein the steady-state voltage provided by the electrical power source may vary slowly over time e.g. over a lifetime of the apparatus or with a state of charge of a battery.

The electrical power source may be an unregulated power source. Specifically, a source voltage measured at the terminals of the electrical power source may be provided to the heating element without being adjusted by a voltage regulator. However, it should be noted that in some examples a regulator may be provided to regulate the voltage provided by the electrical power source. However, the voltage may still vary within limits determined by the regulator. Therefore, by monitoring the temperature of the heating element according to the first aspect, the temperature may be accurately monitored even if regulators with larger tolerances are used to regulate the supply voltage.

Herein, "electrical power source" and "power supply" may be used interchangeably to refer to a source of voltage and current for powering electrical components in the aerosol generation apparatus. In some examples, "electrical power source" may refer to a component which stores or generates electrical energy such as a battery. In other examples, "electrical power source" may refer to a power line or connection which relays electrical energy from another electrical power source to the electrical components. For example, an electrical power source may be a power line provided on a printed circuit board which receives electrical power from a converter or regulator, or a power input module provide on a printed circuit board which receives electrical power from a cable which is plugged into the power input module.

The electrical power source may be a battery. For example, the battery may be a lithium-ion battery, an alkaline battery, a nickel metal hydride (NIMH) battery, or any other suitable type of battery. The voltage provided by the battery may vary with a state of charge of the battery. In some examples, the source voltage may also vary with age of the battery or vary across specific batteries owing to manufacturing tolerances.

The electrical power source may also comprise other types of electrical power source. For example, the apparatus may comprise a power input port configured to receive electrical power from a cable (e.g. power over USB). In some examples, the electrical power source may comprise a battery and a power input port for charging the battery, wherein the electrical current may be supplied to the heating element by the battery in a first mode and the electrical current may be supplied to the heating element from the power input port in a pass-through mode when the battery is being charged.

The heating element may have a positive TCR (Temperature Coefficient of Resistance). In such arrangements an increase in temperature of the heating element corresponds to an increase in electrical resistance of the heating element. However, in some examples the heating element may have a negative TCR wherein an increase in temperature of the heating element corresponds to a decrease in electrical resistance of the heating element.

The heating element may be electrically resistive for producing heat from the flow of electrical current therethrough. For example, the heating element may comprise an electrically conductive heating track which is configured to heat the aerosol precursor. For example, the heating element may comprise a resistive heating rod comprising two supply wires. In this example, the two supply wires may provide positive and negative electrical terminals for the resistive heating rod which is positioned near to the aerosol precursor. When the electrical current is provided to the electrical terminals via the wires, the resistive heating rod may be configured to heat up thus heating the aerosol precursor.

In other examples, the heating element may be a resistive heating element which has a form other than a heating rod having two supply wires, wherein the electrical resistance of the heating element varies with temperature.

The heating element maybe configured to penetrate at least a portion of the aerosol precursor when the aerosol precursor is engaged with the aerosol generating apparatus. In other examples, the heating element may be a tube heater configured to surround a portion of the aerosol precursor.

The processor (which may be also referred to herein as a controller) may form part of a control unit which is configured to control at least one function of the aerosol generation apparatus. The processor may be a microcontroller which is mounted on a printed circuit board (PCB).

The control unit may also comprise a memory, e.g. non-volatile memory, which is in communication with the processor. The memory may include instructions, which, when implemented, may cause the controller to perform certain tasks or steps of a method. Where the apparatus comprises an input connection, the control unit may be connected to the input connection.

The memory may be configured to store the calibration temperature table. For example, the processor may be configured to retrieve the calibration temperature table, or values from the calibration temperature table, from the memory when comparing the sample voltage and the sample current to the calibration temperature table. In other examples, the processor may be configured to retrieve the calibration temperature table from the memory when the aerosol generation apparatus is turned on. In yet further examples, the calibration temperature table may be included in instructions (i.e., hard coded) for execution by the processor which are stored in the memory. In this example, the processor may be configured to execute the instructions, wherein execution of the instructions causes the processor to monitor the temperature of the heating element according to one or more aspects of the present invention.

The target temperature may be an optimal temperature of the heating element for generating an aerosol from the aerosol precursor. The target temperature may also be dependent on different modes for the apparatus, tolerances of components in the apparatus and/or safety regulations of the jurisdictions which the apparatus is intended to be used in. For example, the target temperature of the heating element may be in the range 200°C to 360°C, more preferably 220°C to 345°C. For example, the target temperature of the heating elements may be 315 °C or 345 °C.

In some examples, the aerosol generating apparatus may comprise two or more separate heating elements which are individually controlled. In this example, the two or more separate heating elements may have different target temperatures and / or different heating profiles in a session.

The calibration temperature table may comprise one or more calibration values which correspond to one or more calibration temperatures of the heating element. For example, as described below in more detail, the calibration values may include one or more of: a calibration voltage, a calibration current, a calibration power consumption of the heating element, and/or a calibration resistance of the heating element which correspond to the calibration temperature. The one or more calibration values and/or the one or more calibration temperatures may be stored in the calibration temperature table in SI units (e.g. as °C, V, A, W, Ω) or in other suitable units. For example, the one or more calibration values and/or the one or more calibration temperatures may be stored in the calibration temperature table as raw ADC units which correspond to the raw values received by the processor from circuitry which is external to the processor for measuring the sample current and the sample voltage.

The one or more calibration temperatures may be target temperatures for the heating element. For example, the calibration temperature table may comprise multiple calibration values which correspond to multiple different target temperatures. This may be useful for changing the target temperature of the apparatus, for example to comply with different safety regulations and temperature requirements for different countries or to adjust the aerosol generation apparatus for operation with different aerosol precursors. In other examples, the calibration temperature table may comprise one or more calibration values which correspond to just one target temperature e.g. a calibration resistance which corresponds to a single target temperature.

In yet more examples, the calibration temperature table may comprise multiple calibration values which correspond to multiple different calibration temperatures of the heating element which represent the temperature of the heating element at different stages of heating or cooling, for example when the heating element is first turned on. This is useful for determining the instant temperature of the heating element during heating or for determining a rate at which the temperature of the heating element is heating or cooling. In this example, the processor may be configured to indicate to a user, (e.g. using a display provided on the apparatus or via an application provided on a phone) the instant temperature of the heater by retrieving the corresponding calibration temperature from the calibration table. In some examples, the multiple calibration values may correspond to multiple, sequential target temperatures which correspond to an expected / desired target temperature profile of the heating element during a session. This may be useful for determining if the temperature of the heating element is too high or too low at different points of a heating session.

The calibration temperature table may be populated in a calibration stage wherein the calibration values corresponding to the calibration temperature are measured. In some examples, the calibration stage may form part of the manufacturing process. Preferably, the calibration values corresponding to a calibration temperature are measured using a same aerosol generating apparatus as the aerosol generating apparatus according to the present invention. Specifically, the calibration current and the calibration voltage are ideally measured at the same physical location and electrical location around the heating element as for the sample current and the sample voltage. In other words, the calibration voltage across an electrical load which comprises the heating element and the calibration current through an electrical load which comprises the heating element may be measured during calibration. For example, the electrical load may include the heating element and other electrical components such as a switch or a length of electrical track which may contribute an additional resistance to the electrical load being measured. Accordingly it is preferable for the calibration voltage and the calibration current to be measured across and through the same electrical load as for the sample voltage and sample current.

For example, to measure the calibration values, the heating element, as installed in the aerosol generating apparatus, may be heated to a predetermined calibration temperature which is measured using a temperature sensor (e.g. a thermal camera). The calibration current and the calibration voltage may then be measured, optionally converted into a resistance or power, and stored in the calibration temperature table in the same way as the sample current and sample voltage using the sample electrical circuitry as for the sample current and sample voltage. This increases the accuracy of the temperature control of the aerosol generating apparatus because the likelihood of measurement errors owing to the use of different measurement equipment during the calibration stage is reduced.

However, in some examples the calibration values may be acquired using a different method. For example, the calibration values may be provided by a supplier or manufacturer of the heating element.

In some examples, the calibration values may be measured or acquired for a given heating element at a first stage in a production process of the aerosol generation device. The calibration values may then be provided to the aerosol generation device (i.e. to the processing unit, or to a memory in communication with the processing unit) at a later stage in the production process (e.g. when the heating element is fitted to the aerosol generation apparatus).

The calibration temperature table may comprise calibration values in SI units. For example, voltage values may be in Volts, current values may be in Amperes, resistance values may be in Ohms, power may be in Watts, and temperature may be in degrees Celsius. However, in some examples the calibration temperature table may comprise calibration values in different units. For example, the units may correspond to raw ADC units which correspond to the digital outputs from ADCs (as described below) used to convert a measured voltage or current into a digital input for the processor. Storing calibration values in raw units may reduce the computing complexity involved in monitoring the temperature of the heating element and increase the accuracy of the temperature monitoring because fewer calculations are needed to convert values to different units and the likelihood of rounding errors which may be introduced by unit conversions may be reduced.

The processor may be configured to calculate a sample resistance of the heating element from the sample voltage and the sample current. In this example, comparing the sample voltage and the sample current to the calibration temperature table may comprise comparing the sample resistance to a calibration resistance in the calibration temperature table.

Calculating a sample resistance of the heater element provides an efficient way to monitor the temperature of the heating element because the resistance of the heating element is independent of the voltage supplied by the power supply. Accordingly, a more accurate measurement of temperature may be made.

The calibration temperature table may comprise a calibration resistance which corresponds to a target temperature for the heating element. Therefore, if the heating element has a positive TCR relationship, and the sample resistance is higher than the calibration resistance then the temperature of the heating element may be determined by the processor to be higher than the target temperature. If the heating element has a negative TCR relationship, then the temperature of the heating element may be determined by the processor to be lower than the target temperature.

In some examples, the calibration temperature table may comprise a plurality of calibration resistances and corresponding temperatures for the heating element. In this case, the processor may be configured to lookup the sample resistance of the heater element in the calibration temperature table to determine the corresponding temperature. If the corresponding temperature is higher than the target temperature, then the processor may determine that the instant temperature of the heating element higher than the target temperature.

In some examples, the processor may be configured to calculate a sample power consumption of the heating element from the sample voltage and the sample current. In this example, comparing the sample voltage and the sample current of the heater element to the calibration temperature table may comprise comparing the sample power consumption to a calibration power in the calibration temperature table.

Comparing the sample power consumption to the calibration power may comprise calculating an adjusted calibration power, and comparing the sample power consumption to the adjusted calibration power wherein the adjusted calibration power is given by:

$$Padj = Vs^2 \cdot \frac{Pcal}{Vcal^2}$$

wherein Padj is the adjusted calibration power, Vcal is a calibration voltage across the heating element when the calibration power was measured, Pcal is the calibration power, and Vs is the sample voltage.

Therefore, in this example, the calibration temperature table may comprise a calibration power consumption which corresponds to a calibration voltage and to a target temperature for the heating element. Therefore, if the heating element has a positive TCR relationship, and the sample power consumption is higher than the adjusted calibration power then the temperature of the heating element may be determined by the processor to be lower than the target temperature. If the heating element has a negative TCR relationship, then the temperature of the heating element may be determined by the processor to be higher than the target temperature.

Comparing the sample power consumption to an adjusted calibration power provides a more accurate determination of the temperature of the heating element by removing a reliance on the voltage supplied to the heating element during calibration. For example, the electrical power source provided in the aerosol generating apparatus may be a different electrical power source or provide a different voltage to an electrical power source which was used to populate the calibration temperature table.

For example, monitoring the power consumption of the heating element (e.g. instead of the resistance of the heating element) may be useful when power consumption data associated with the heating element is provided by a supplier of the heating element. In this case, Vcal may correspond to a constant voltage provided by a bench top power supply which was used during supplier testing of the heating element prior to assembly of the aerosol generation apparatus. Accordingly, calculating Padj enables the power consumption calculated by the supplier to be adjusted to account for variable voltage supplied by the electrical power source in the aerosol generation apparatus.

The aerosol generation apparatus may further comprise a current sense amplifier for measuring the sample current. An ADC may be provided for converting the measured sample current to a digital representation of the sample current. Therefore, receiving the sample current may include receiving the digital representation of the sample current from the ADC. In some examples, the ADC may be included in the same device or package as the processor. In other examples, the ADC may be a separate component to the processor.

The current sense amplifier may be a differential amplifier configured to amplify a voltage drop across a current sense resistor, wherein the current sense resistor is located in series with the heating element. The current sense resistor may have a resistance between $100m\Omega$ to $1\Omega$. In some examples the current sense resistor may be included in a same package as the current sense amplifier or provided as a separate component to the current sense amplifier. The voltage drop amplified by the current sense amplifier represents the measured sample current which may then be converted by an ADC into a digital signal representing the sample current for receipt by the processor.

The processor may be configured to receive the sample current in raw ADC units. In this example, the calibration temperature table may comprise values corresponding to the raw ADC units. Advantageously, performing the temperature control in raw ADC units is more efficient since additional processing is not needed to convert the signals from the ADC to SI units. Additionally, a smaller processor which has less processing capability and therefore lower power requirements may be used to perform accurate temperature control since raw ADC values may be represented using fewer bits in the processor without needing to reduce the number of significant figures used to represent the sample current or perform rounding of the sample current which may be required if SI units were used.

The current sense amplifier may receive power from a second electrical power source. The second electrical power source may be a regulated electrical power source which is configured to provide a constant voltage supply to the current sense amplifier. In some examples, the second electrical power source may be a regulated power line originating from the first electrical power source. In other words, the second electrical power source may be a power line which receives electrical power from a voltage regulator, wherein the voltage regulator receives electrical current from the first electrical power source.

The electrical power source may be connected to the heating element via a switch. The processor may be configured to enable and disable supply of the electrical current to the heating element by providing a control signal to the switch. Enabling and disabling of the supply of the electrical current to the heating element may also be referred to herein as "enabling" and "disabling" the heating element and turning the heating element "off" and "on".

The current sense amplifier be located between the switch and the heating element. Herein, "located" is intended to refer to electrically located. In this example, the current sense amplifier is configured to sample the current flowing through a region of conductor which is in series with the switch and the heating element. By positioning the current sense amplifier between the switch and the heating element the processor may be able to determine from the sample current received from the current sense amplifier if the electrical current is flowing through the heating element (i.e., whether the heating element is switched on).

This may also be useful for safety control of the aerosol generation apparatus by enabling the detection of short circuits or failures in the circuitry. For example, if the processor has driven the control line to open the switch but the sample current is not zero, then there may be a short circuit through the switch. In contrast, if the processor has driven the control line to close the switch but the sample current is zero then this may be an indication that the heating element may have an open circuit, for example when the heating element is damaged thus preventing the flow of the electrical current therethrough.

The aerosol generation apparatus may further comprise a voltage ADC for converting a measured sample voltage to a digital representation of the sample voltage. As such, receiving the sample voltage may include receiving the digital representation of the sample voltage from the voltage ADC. In some examples, the voltage ADC may be included in the same device or package as the processor. In other examples, the voltage ADC may be provided as a separate component to the processor.

The aerosol generation apparatus may further comprise a voltage divider for reducing the measured sample voltage to be within an operating range of the voltage ADC. In this way, the input voltage to the ADC (i.e. the measured sample voltage) may be prevented from exceeding a maximum input voltage of the ADC thus allowing the processor to monitor a larger range of voltages across the heating element.

As mentioned above, the electrical power source may be connected to the heating element via a switch, wherein the processor is configured to enable and disable electrical current to the heating element by providing a control signal to the switch. In this case, the sample voltage may be measured from a measurement point located electrically between the switch and the heating element. In other words, the voltage divider may be electrically located between the switch and the heater element. The voltage may be measured between the measurement point which is connected to a first terminal of the heating element and a second measurement point connected to a second terminal of the heating element. The second measurement point may be connected to electrical ground. In some examples, the measurement point and the second measurement point may be positive and negative terminals of the heating element. By measuring the sample voltage from a measurement point which is between the switch and the heating element, the sample voltage may usefully be monitored to determine if electrical current is flowing through the heating element.

The processor may be configured to enable the supply of the electrical current to the heating element before receiving the sample current and the sample voltage. If the electrical current is not flowing through the heating element at the beginning of a measurement (i.e., the heating element is switched off) then the sample current and the sample voltage cannot be used to determine the instant temperature of the heating element. Therefore, by first enabling the supply of the electrical current to the heating element before receiving the sample current and the sample voltage, the temperature of the heating element may be measured even if the heating element is not enabled (i.e., the heating element was turned off) at the beginning of a measurement.

The processor may be configured to disable the supply of the electrical current from the electrical power source to the heating element (i.e., switch the heating element off) if the instant temperature of the heating element is higher than the target temperature. Therefore, the heating element may cool down towards the target temperature thus maintaining the temperature of the heating element close to the target temperature and providing automatic temperature control.

In some examples, the processor may be configured to disable the supply of the electrical current from the electrical power source to the heating element if the instant temperature of the heating element is higher than a maximum threshold above the target temperature. For example, the processor may only disable the supply of the electrical current to the heating element if the instant temperature is more than 1°C higher than the target temperature.

In some examples, the maximum threshold above the target temperature may correspond to a resistance value (or a power consumption) above a calibration resistance value (or calibration power) which corresponds to the target temperature. Thus, the processor may only disable the supply of the electrical current to the heating element if the sample resistance (or sample power) is more than a predetermined number of units above the calibration resistance (or calibration power) which corresponds to the target temperature.

The processor may be configured to leave the heater element on if the instant temperature of the heating element is lower than the target temperature (i.e., such that the electrical current is flowing therethrough).

In some examples, the processor may be configured to leave the heater element on if the instant temperature of the heating element is lower than a minimum threshold below the target temperature. Therefore, if the instant temperature is the same as the target temperature, or slightly lower than the target temperature but higher than the minimum threshold temperature, then the processor may be configured to disable the supply of the electrical current from the electrical power source to the heating element to reduce the likelihood of the temperature of the heating element increasing beyond the target temperature.

Alternatively or additionally, the processor may be configured to implement a more complex control protocol for the heating element. For example, the processor may be configured to reduce, increase of pulse the electrical current flowing though the heating element.

The aerosol generation apparatus may be a heat not burn (HNB) or Heated tobacco (HT) device wherein the heating element is configured to heat a portion of aerosol precursor, which is a heat not burn or HT consumable, engaged with the device.

The device may comprise an elongate body. An end of the elongate body may be configured for engagement with an aerosol-forming article (e.g. a heated tobacco (HT) consumable). The device may comprise a cavity that is configured for receipt of at least a portion of the consumable (i.e. for engagement with the consumable). The aerosol-forming article may be of the type that comprises an aerosol former (e.g. carried by an aerosol-forming substrate).

The heating element, which may be in the form of a rod that extends from a body of the device. The heating element may extend from the end of the body that is configured for engagement with an aerosol-forming article.

The heating element may be rigidly mounted to the body. The heating element may be elongate so as to define a longitudinal axis and may, for example, have a transverse profile (i.e. transverse to a longitudinal axis of the heating element) that is substantially circular (i.e. the heating element may be generally cylindrical). Alternatively, the heating element may have a transverse profile that is rectangular (i.e. the heater may be a "blade heater"). The heating element may alternatively be in the shape of a tube (i.e. the heater may be a "tube heater"). The heating element may take other forms (e.g. the heating element may have an elliptical transverse profile). The shape and/or size (e.g. diameter) of the transverse profile of the heating element may be generally consistent for the entire length (or substantially the entire length) of the heating element.

The heating element may be between 15 mm and 25 mm long, e.g. between 18 mm and 20 mm long, e.g. around 19 mm long. The heating element may have a diameter of between 1.5 mm and 2.5 mm, e.g. a diameter between 2 mm and 2.3 mm, e.g. a diameter of around 2.15 mm.

The heating element may be formed of ceramic. The heating element may comprise a core (e.g. a ceramic core) comprising $Al_2O_3$. The core of the heating element may have a diameter of 1.8 mm to 2.1 mm, e.g. between 1.9 mm and 2 mm. The heating element may comprise an outer layer (e.g. an outer ceramic layer) comprising $Al_2O_3$. The thickness of the outer layer may be between 160 $\mu$m and 220 $\mu$m, e.g. between 170 $\mu$m and 190 $\mu$m, e.g. around 180 $\mu$m. The heating element may comprise a heating track, which may extend longitudinally along the heating element. The heating track may be sandwiched between the outer layer and the core of the heating element. The heating track may comprise tungsten and/or rhenium. The heating track may have a thickness of around 20 $\mu$m.

The heating element may be located in a cavity (of the apparatus), and may extend (e.g. along a longitudinal axis) from an internal base of the cavity towards an opening of the cavity. The length of the heating element (i.e. along the longitudinal axis of the heater) may be less than the depth of the cavity. Hence, the heating element may extend for only a portion of the length of the cavity. That is, the heating element may not extend through (or beyond) the opening of the cavity.

The heating element may be configured for insertion into an aerosol-forming article (e.g. a HT consumable) when an aerosol-forming article is received in the cavity. In that respect, a distal end (i.e. distal from a base of the heating element where it is mounted to the device) of the heating element may comprise a tapered portion, which may facilitate insertion of the heating element into the aerosol-forming article. The heating element may fully penetrate an aerosol-forming article when the aerosol-forming article is received in the cavity. That is, the entire length, or substantially the entire length, of the heating element may be received in the aerosol-forming article.

The heating element may have a length that is less than, or substantially the same as, an axial length of an aerosol-forming substrate forming part of an aerosol-forming article (e.g. a HT consumable). Thus, when such an aerosol-forming article is engaged with the device, the heating element may only penetrate the aerosol-forming substrate, rather than other components of the aerosol-forming article. The heating element may penetrate the aerosol-forming substrate for substantially the entire axial length of the aerosol forming-substrate of the aerosol-forming article. Thus, heat may be transferred from (e.g. an outer circumferential surface of) the heating element to the surrounding aerosol-forming substrate, when penetrated by the heating element. That is, heat may be transferred radially outwardly (in the case of a cylindrical heating element) or e.g. radially inwardly (in the case of a tube heater).

Where the heater is a tube heater, the heating element of the tube heater may surround at least a portion of the cavity. When the portion of the aerosol-forming article is received in the cavity, the heating element may surround a portion of the aerosol-forming article (i.e. so as to heat that portion of the aerosol-forming article). In particular, the heating element may surround an aerosol forming substrate of the aerosol-forming article. That is, when an aerosol-forming article is engaged with the device, the aerosol forming substrate of the aerosol-forming article may be located adjacent an inner surface of the (tubular) heating element. When the heating element is activated, heat may be transferred radially inwardly from the inner surface of the heating element to heat the aerosol forming substrate.

The cavity may comprise a (e.g. circumferential) wall (or walls) and the (tubular) heating element may extend around at least a portion of the wall(s). In this way, the wall may be located between the inner surface of the heating element and an outer surface of the aerosol-forming article. The wall (or walls) of the cavity may be formed from a thermally conductive material (e.g. a metal) to allow heat conduction from the heating element to the aerosol-forming article. Thus, heat may be conducted from the heating element, through the cavity wall (or walls), to the aerosol-forming substrate of an aerosol-forming article received in the cavity.

As mentioned above the apparatus may comprise an input connection (e.g. a USB port, Micro USB port, USB-C port, etc.). The input connection may be configured for connection to an external source of electrical power, such as a mains electrical supply outlet. The input connection may, in some cases, be used as a substitute for an internal power source (e.g. battery or rechargeable battery). That is, the input connection may be electrically connectable to the heater (for providing power to the heater). Hence, in some forms, the input connection may form at least part of the power source of the device.

Where the electrical power source comprises a rechargeable power source (such as a rechargeable battery), the input connection may be used to charge and recharge the power source.

In a second aspect of the present invention there may be provided: a method of controlling temperature of a heating element in an aerosol generation apparatus according to any preceding claim, the method comprising:

enabling a supply of electrical current from an electrical power source to the heating element such that the electrical current flows through the heating element,
waiting for a predetermined settling time,
receiving a sample current through the heating element and a sample voltage across the heating element, and
determining an instant temperature of the heating element from the sample current and the sample voltage.

In a further aspect of the present invention there may be provided a computer readable memory comprising instructions which when executed perform the method of the second aspect.

In a further aspect of the present invention there may be provided an aerosol generation apparatus comprising:

a heating element configured to heat an aerosol precursor, wherein the heating element is configured to produce heat from a flow of electrical current therethrough;
an electrical power source for supplying the electrical current to the heating element; and
a processor configured to monitor an instant temperature of the heating element by:

receiving a sample current through the heating element and a sample voltage across the heating element,
comparing the sample voltage and the sample current to a calibration temperature table, and
determining from the comparison if the instant temperature of the heating element is higher or lower than a target temperature.

In a further aspect of the present invention there may be provided: a method of monitoring the temperature of a heating element in an aerosol generation apparatus, the method comprising:

receiving a sample current through the heating element and a sample voltage across the heating element,
comparing the sample voltage and the sample current to a calibration temperature table, and
determining from the comparison if the instant temperature of the heating element is higher or lower than a target temperature.

In a further aspect of the present invention there may be provided a computer readable memory comprising instructions which when executed perform the method of any previous aspect.

In a further aspect of the present invention, there is provided electrical circuitry and/or a computer program configured to cause an aerosol generating apparatus/system to perform any method or method step disclosed herein. A computer readable medium comprising the computer program is also disclosed.

In a further aspect of the present invention, there is provided a system (e.g. a smoking substitute system) comprising a smoking substitute apparatus according to the first aspect and an HNB consumable. The HNB consumable may comprise an aerosol-forming substrate at an upstream end of the HNB consumable. The HNB consumable may be in the form of a smoking substitute article, e.g. heated tobacco (HT) consumable (also known as a heat-not- burn (HNB) consumable).

The preceding summary is provided for purposes of summarizing some examples to provide a basic understanding of aspects of the subject matter described herein. Accordingly, the above-described features should not be construed to narrow the scope or spirit of the subject matter described herein in any way. Moreover, the above and/or proceeding examples may be combined in any suitable combination to provide further examples, except where such a combination is clearly impermissible or expressly avoided. Other features, aspects, and advantages of the subject matter described herein will become apparent from the following text and the accompanying drawings.

## BRIEF DESCRIPTION OF THE FIGURES

Aspects, features and advantages of the present disclosure will become apparent from the following description of examples in reference to the appended drawings in which like numerals denote like elements.

**Fig. 1** is a block system diagram showing an example aerosol generating apparatus.

**Fig. 2** is a block system diagram showing an example implementation of the apparatus of Fig. 1, where the aerosol generating apparatus is configured to generate aerosol from a liquid precursor.

**Figs. 3a and 3b** are schematic diagrams showing an example implementation of the apparatus of Fig. 2.

**Fig. 4** is a block system diagram showing an example implementation of the apparatus of Fig. 1, where the aerosol generating apparatus is configured to generate aerosol from a solid precursor.

**Fig. 5** is a schematic diagram showing an example implementation of the apparatus of Fig. 4.

**Fig. 6** is a block system diagram showing an example system for managing an aerosol generating apparatus according to at least one aspect of the present invention.

**Fig. 7** is an example heating element according to the present invention.

**Fig. 8** is a flowchart illustrating an example process for monitoring the temperature of a heating element.

**Fig. 9** is a flowchart illustrating another example process for monitoring the temperature of a heating element.

**Fig. 10** is a flowchart illustrating another example process for monitoring the temperature of a heating element.

**Fig. 11** is a flowchart illustrating an example process for controlling the temperature of a heating element.

**Fig. 12** is a schematic diagram of an example system for monitoring temperature of a heating element according to at least one aspect of the present invention.

## DETAILED DESCRIPTION OF EMBODIMENTS

Before describing several examples implementing the present disclosure, it is to be understood that the present disclosure is not limited by specific construction details or process steps set forth in the following description and accompanying drawings. Rather, it will be apparent to those skilled in the art having the benefit of the present disclosure that the systems, apparatuses and/or methods described herein could be embodied differently and/or be practiced or carried out in various alternative ways.

Unless otherwise defined herein, scientific and technical terms used in connection with the presently disclosed inventive concept(s) shall have the meanings that are commonly understood by those of ordinary skill in the art, and known techniques and procedures may be performed according to conventional methods well known in the art and as described in various general and more specific references that may be cited and discussed in the present specification.

Any patents, published patent applications, and non-patent publications mentioned in the specification are hereby incorporated by reference in their entirety.

All examples implementing the present disclosure can be made and executed without undue experimentation in light of the present disclosure. While particular examples have been described, it will be apparent to those of skill in the art that variations may be applied to the systems, apparatus, and/or methods and in the steps or in the sequence of steps of the methods described herein without departing from the concept, spirit, and scope of the inventive concept(s). All such similar substitutions and modifications apparent to those skilled in the art are deemed to be within the spirit, scope, and concept of the inventive concept(s) as defined by the appended claims.

The use of the term "a" or "an" in the claims and/or the specification may mean "one," as well as "one or more," "at least one," and "one or more than one." As such, the terms "a," "an," and "the," as well as all singular terms, include plural referents unless the context clearly indicates otherwise. Likewise, plural terms shall include the singular unless otherwise required by context.

The use of the term "or" in the present disclosure (including the claims) is used to mean an inclusive "and/or" unless explicitly indicated to refer to alternatives only or unless the alternatives are mutually exclusive. For example, a condition "A or B" is satisfied by any of the following: A is true (or present) and B is false (or not present), A is false (or not present) and B is true (or present), and both A and B are true (or present).

As used in this specification and claim(s), the words "comprising, "having," "including," or "containing" (and any forms thereof, such as "comprise" and "comprises," "have" and "has," "includes" and "include," or "contains" and "contain," respectively) are inclusive or open-ended and do not exclude additional, unrecited elements or method steps.

Unless otherwise explicitly stated as incompatible, or the physics or otherwise of the embodiments, examples, or claims prevent such a combination, the features of examples disclosed herein, and of the claims, may be integrated together in any suitable arrangement, especially ones where there is a beneficial effect in doing so. This is not limited to only any specified benefit, and instead may arise from an "ex post facto" benefit. This is to say that the combination of features is not limited by the described forms, particularly the form (e.g. numbering) of example(s), embodiment(s), or dependency of claim(s). Moreover, this also applies to the phrase "in one embodiment," "according to an embodiment," and the like, which are merely a stylistic form of wording and are not to be construed as limiting the following features to a separate embodiment to all other instances of the same or similar wording. This is to say, a reference to 'an,' 'one,' or 'some' embodiment(s) may be a reference to any one or more, and/or all embodiments, or combination(s) thereof, disclosed. Also, similarly, the reference to "the" embodiment may not be limited to the immediately preceding embodiment. Further, all references to one or more embodiments or examples are to be construed as non-limiting to the claims.

The present disclosure may be better understood in view of the following explanations, wherein the terms used that are separated by "or" may be used interchangeably:

As used herein, an **"aerosol generating apparatus"** (or **"electronic(e)-cigarette")** may be an apparatus configured to deliver an aerosol to a user for inhalation by the user. The apparatus may additionally/alternatively be referred to as a "smoking substitute apparatus", if it is intended to be used instead of a conventional combustible smoking article. As used herein a combustible "smoking article" may refer to a cigarette, cigar, pipe or other article, that produces smoke (an aerosol comprising solid particulates and gas) via heating above the thermal decomposition temperature (typically by combustion and/or pyrolysis). An aerosol generated by the apparatus may comprise an aerosol with particle sizes of 0.2 - 7 microns, or less than 10 microns, or less than 7 microns. This particle size may be achieved by control of one or more of: heater temperature; cooling rate as the vapour condenses to an aerosol; flow properties including turbulence and velocity. The generation of aerosol by the aerosol generating apparatus may be controlled by an input device. The input device may be configured to be user-activated, and may for example include or take the form of an actuator (e.g. actuation button) and/or an airflow sensor.

Each occurrence of the aerosol generating apparatus being caused to generate aerosol for a period of time (which may be variable) may be referred to as an **"activation"** of the aerosol generating apparatus. The aerosol generating apparatus may be arranged to allow an amount of aerosol delivered to a user to be varied per activation (as opposed to delivering a fixed dose of aerosol), e.g. by activating an aerosol generating unit of the apparatus for a variable amount of time, e.g. based on the strength/duration of a draw of a user through a flow path of the apparatus (to replicate an effect of smoking a conventional combustible smoking article).

The aerosol generating apparatus may be portable. As used herein, the term **"portable"** may refer to the apparatus being for use when held by a user.

As used herein, an **"aerosol generating system"** may be a system that includes an aerosol generating apparatus and optionally other circuitry/components associated with the function of the apparatus, e.g. one or more external devices and/or one or more external components (here "external" is intended to mean external to the aerosol generating apparatus).

As used herein, an "external device" and "external component" may include one or more of a: a charging device, a mobile device (which may be connected to the aerosol generating apparatus, e.g. via a wireless or wired connection); a networked-based computer (e.g. a remote server); a cloud-based computer; any other server system.

An example aerosol generating system may be a system for managing an aerosol generating apparatus. Such a system may include, for example, a mobile device, a network server, as well as the aerosol generating apparatus.

As used herein, an **"aerosol"** may include a suspension of precursor, including as one or more of: solid particles; liquid droplets; gas. Said suspension may be in a gas including air. An aerosol herein may generally refer to/include a vapour. An aerosol may include one or more components of the precursor.

As used herein, a **"precursor"** may include one or more of a: liquid; solid; gel; loose leaf material; other substance. The precursor may be processed by an aerosol generating unit of an aerosol generating apparatus to generate an aerosol. The precursor may include one or more of: an active component; a carrier; a flavouring. The active component may include one or more of nicotine; caffeine; a cannabidiol oil; a non-pharmaceutical formulation, e.g. a formulation which is not for treatment of a disease or physiological malfunction of the human body. The active component may be carried by the carrier, which may be a liquid, including propylene glycol and/or glycerine. The term "flavouring" may refer to a component that provides a taste and/or a smell to the user. The flavouring may include one or more of: Ethylvanillin (vanilla); menthol, Isoamyl acetate (banana oil); or other. The precursor may include a substrate, e.g. reconstituted tobacco to carry one or more of the active component; a carrier; a flavouring.

As used herein, a **"storage portion"** may be a portion of the apparatus adapted to store the precursor. It may be implemented as fluid-holding reservoir or carrier for solid material depending on the implementation of the precursor as defined above.

As used herein, a **"flow path"** may refer to a path or enclosed passageway through an aerosol generating apparatus, e.g. for delivery of an aerosol to a user. The flow path may be arranged to receive aerosol from an aerosol generating unit. When referring to the flow path, upstream and downstream may be defined in respect of a direction of flow in the flow path, e.g. with an outlet being downstream of an inlet.

As used herein, a **"delivery system"** may be a system operative to deliver an aerosol to a user. The delivery system may include a mouthpiece and a flow path.

As used herein, a **"flow"** may refer to a flow in a flow path. A flow may include aerosol generated from the precursor. The flow may include air, which may be induced into the flow path via a puff by a user.

As used herein, a **"puff"** (or **"inhale"** or **"draw"**) by a user may refer to expansion of lungs and/or oral cavity of a user to create a pressure reduction that induces flow through the flow path.

As used herein, an **"aerosol generating unit"** may refer to a device configured to generate an aerosol from a precursor. The aerosol generating unit may include a unit to generate a vapour directly from the precursor (e.g. a heating system or other system) or an aerosol directly from the precursor (e.g. an atomiser including an ultrasonic system, a flow expansion system operative to carry droplets of the precursor in the flow without using electrical energy or other system). A plurality of aerosol generating units to generate a plurality of aerosols (for example, from a plurality of different aerosol precursors) may be present in an aerosol generating apparatus.

As used herein, a **"heating system"** may refer to an arrangement of at least one heating element, which is operable to aerosolise a precursor once heated. The at least one heating element may be electrically resistive to produce heat from the flow of electrical current therethrough. The at least one heating element may be arranged as a susceptor to produce heat when penetrated by an alternating magnetic field. The heating system may be configured to heat a precursor to below 300 or 350 degrees C, including without combustion.

As used herein, a **"consumable"** may refer to a unit that includes a precursor. The consumable may include an aerosol generating unit, e.g. it may be arranged as a cartomizer. The consumable may include a mouthpiece. The consumable may include an information carrying medium. With liquid or gel implementations of the precursor, e.g. an e-liquid, the consumable may be referred to as a "capsule" or a "pod" or an "e-liquid consumable". The capsule/pod may include a storage portion, e.g. a reservoir or tank, for storage of the precursor. With solid material implementations of the precursor, e.g. tobacco or reconstituted tobacco formulation, the consumable may be referred to as a "stick" or "package" or "heat-not-burn consumable". In a heat-not-burn consumable, the mouthpiece may be implemented as a filter and the consumable may be arranged to carry the precursor. The consumable may be implemented as a dosage or pre-portioned amount of material, including a loose-leaf product.

As used herein, an **"information carrying medium"** may include one or more arrangements for storage of information on any suitable medium. Examples include: a computer readable medium; a Radio Frequency Identification (RFID) transponder; codes encoding information, such as optical (e.g. a bar code or QR code) or mechanically read codes (e.g. a configuration of the absence or presents of cut-outs to encode a bit, through which pins or a reader may be inserted).

As used herein **"heat-not-burn"** (or **"HNB"** or **"heated precursor"**) may refer to the heating of a precursor, typically tobacco, without combustion, or without substantial combustion (i.e. localised combustion may be experienced of limited portions of the precursor, including of less than 5% of the total volume).

As used herein, **"electrical circuitry"** may refer to one or more electrical components, examples of which may include: an Application Specific Integrated Circuit (ASIC); electronic/electrical componentry (which may include combinations of transistors, resistors, capacitors, inductors etc); one or more processors; a non-transitory memory (e.g. implemented by one or more memory devices), that may store one or more software or firmware programs; a combinational logic circuit; interconnection of the aforesaid. The electrical circuitry may be located entirely at the apparatus, or distributed between the apparatus and/or on one or more external devices in communication with the apparatus, e.g. as part of a system.

As used herein, a **"processing resource"** (or **"processor"** or **"processor"**) may refer to one or more units for processing data, examples of which may include an ASIC, microprocessor, FPGA, microprocessor, digital signal processor (DSP) capability, state machine or other suitable component. A processing resource may be configured to execute a computer program, e.g. which may take the form of machine readable instructions, which may be stored on a non-transitory memory and/or programmable logic. The processing resource may have various arrangements corresponding to those discussed for the circuitry, e.g. on-board and/or off board the apparatus as part of the system. As used herein, any machine executable instructions, or computer readable media, may be configured to cause a disclosed method to be carried out, e.g. by a aerosol generating apparatus or system as disclosed herein, and may therefore be used synonymously with the term method.

As used herein, an **"external device"** (or **"peripheral device"**) may include one or more electronic components external to an aerosol generating apparatus. Those components may be arranged at the same location as the aerosol generating apparatus or remote from the apparatus. An external device may comprise electronic computer devices including: a smartphone; a PDA; a video game processor; a tablet; a laptop; or other like device.

As used herein, a **"computer readable medium/media"** (or **"memory"** or **"data storage"**) may include any medium capable of storing a computer program, and may take the form of any conventional non-transitory memory, for example one or more of: random access memory (RAM); a CD; a hard drive; a solid state drive; a memory card; a DVD. The memory may have various arrangements corresponding to those discussed for the circuitry /processor. The present disclosure includes a computer readable medium configured to cause an apparatus or system disclosed herein to perform a method as disclosed herein.

As used herein, a **"communication resource"** (or **"communication interface"**) may refer to hardware and/or firmware for electronic information/data transfer. The communication resource may be configured for wired communication ("wired communication resources") or wireless communication ("wireless communication resource"). Wireless communication resources may include hardware to transmit and receive signals by radio and may include various protocol implementations e.g.

the 802.11 standard described in the Institute of Electronics Engineers (IEEE) and Bluetooth™ from the Bluetooth Special Interest Group of Kirkland Wash. Wired communication resources may include; Universal Serial Bus (USB); High-Definition Multimedia Interface (HDMI) or other protocol implementations. The apparatus may include communication resources for wired or wireless communication with an external device.

As used herein, a **"network"** (or **"computer network"**) may refer to a system for electronic information/data transfer between a plurality of apparatuses/devices. The network may, for example, include one or more networks of any type, which may include: a Public Land Mobile Network (PLMN); a telephone network (e.g. a Public Switched Telephone Network (PSTN) and/or a wireless network); a local area network (LAN); a metropolitan area network (MAN); a wide area network (WAN); an Internet Protocol Multimedia Subsystem (IMS) network; a private network; the Internet; an intranet.

It will be appreciated that any of the disclosed methods (or corresponding apparatuses, programs, data carriers, etc.) may be carried out by either a host or client, depending on the specific implementation (i.e. the disclosed methods/apparatuses are a form of communication(s), and as such, may be carried out from either 'point of view', i.e. in corresponding to each other fashion). Furthermore, it will be understood that the terms "receiving" and "transmitting" encompass "inputting" and "outputting" and are not limited to an RF context of transmitting and receiving electromagnetic (e.g. radio) waves. Therefore, for example, a chip or other device or component for realizing embodiments could generate data for output to another chip, device or component, or have as an input data from another chip, device, or component, and such an output or input could be referred to as "transmit" and "receive" including gerund forms, that is, "transmitting" and "receiving," as well as such "transmitting" and "receiving" within an RF context.

Referring to Fig. 1, an example aerosol generating apparatus 1 includes a power supply 2, for supply of electrical energy. The apparatus 1 includes an aerosol generating unit 4 that is driven by the power supply 2. The power supply 2 may include an electric power supply in the form of a battery and/or an electrical connection to an external power source. The apparatus 1 includes a precursor 6, which in use is aerosolised by the aerosol generating unit 4 to generate an aerosol. The apparatus 2 includes a delivery system 8 for delivery of the aerosol to a user.

Electrical circuitry (not shown in figure 1) may be implemented to control the interoperability of the power supply 4 and aerosol generating unit 6.

In variant examples, which are not illustrated, the power supply 2 may be omitted since, e.g. an aerosol generating unit implemented as an atomiser with flow expansion may not require a power supply.

Fig. 2 shows an implementation of the apparatus 1 of Fig. 1, where the aerosol generating apparatus 1 is configured to generate aerosol from a liquid precursor.

In this example, the apparatus 1 includes a device body 10 and a consumable 30.

In this example, the body 10 includes the power supply 4. The body may additionally include any one or more of electrical circuitry 12, a memory 14, a wireless interface 16, one or more other components 18.

The electrical circuitry 12 may include a processing resource for controlling one or more operations of the body 10 and consumable 30, e.g. based on instructions stored in the memory 14.

The wireless interface 16 may be configured to communicate wirelessly with an external (e.g. mobile) device, e.g. via Bluetooth.

The other component(s) 18 may include one or more user interface devices configured to convey information to a user and/or a charging port, for example (see e.g. Fig. 3).

The consumable 30 includes a storage portion implemented here as a tank 32 which stores the liquid precursor 6 (e.g. e-liquid). The consumable 30 also includes a heating system 34, one or more air inlets 36, and a mouthpiece 38. The consumable 30 may include one or more other components 40.

The body 10 and consumable 30 may each include a respective electrical interface (not shown) to provide an electrical connection between one or more components of the body 10 with one or more components of the consumable 30. In this way, electrical power can be supplied to components (e.g. the heating system 34) of the consumable 30, without the consumable 30 needing to have its own power supply.

In use, a user may activate the aerosol generating apparatus 1 when inhaling through the mouthpiece 38, i.e. when performing a puff. The puff, performed by the user, may initiate a flow through a flow path in the consumable 30 which extends from the air inlet(s) 34 to the mouthpiece 38 via a region in proximity to the heating system 34.

Activation of the aerosol generating apparatus 1 may be initiated, for example, by an airflow sensor in the body 10 which detects airflow in the aerosol generating apparatus 1 (e.g. caused by a user inhaling through the mouthpiece), or by actuation of an actuator included in the body 10. Upon activation, the electrical circuitry 12 (e.g. under control of the processing resource) may supply electrical energy from the power supply 2 to the heating system 34 which may cause the heating system 32 to heat liquid precursor 6 drawn from the tank to produce an aerosol which is carried by the flow out of the mouthpiece 38.

In some examples, the heating system 34 may include a heating filament and a wick, wherein a first portion of the wick extends into the tank 32 in order to draw liquid precursor 6 out from the tank 32, wherein the heating filament coils around a second portion of the wick located outside the tank 32. The heating filament may be configured to heat up liquid precursor 6 drawn out of the tank 32 by the wick to produce the aerosol.

In this example, the aerosol generating unit 4 is provided by the above-described heating system 34 and the delivery system 8 is provided by the above-described flow path and mouthpiece 38.

In variant embodiments (not shown), any one or more of the precursor 6, heating system 34, air inlet(s) 36 and mouthpiece 38, may be included in the body 10. For example, the mouthpiece 36 may be included in the body 10 with the precursor 6 and heating system 32 arranged as a separable cartomizer.

Figs. 3a and 3b show an example implementation of the aerosol generating device 1 of Fig. 2. In this example, the consumable 30 is implemented as a capsule/pod, which is shown in Fig. 3a as being physically coupled to the body 10, and is shown in Fig. 3b as being decoupled from the body 10.

In this example, the body 10 and the consumable 30 are configured to be physically coupled together by pushing the consumable 30 into an aperture in a top end 11 the body 10, with the consumable 30 being retained in the aperture via an interference fit.

In other examples (not shown), the body 10 and the consumable 30 could be physically coupled together in other ways, e.g. by screwing one onto the other, through a bayonet fitting, or through a snap engagement mechanism, for example.

The body 10 also includes a charging port (not shown) at a bottom end 13 of the body 10.

The body 10 also includes a user interface device configured to convey information to a user. Here, the user interface device is implemented as a light 15, which may e.g. be configured to illuminate when the apparatus 1 is activated. Other user interface devices are possible, e.g. to convey information haptically or audibly to a user.

In this example, the consumable 30 has an opaque cap 31, a translucent tank 32 and a translucent window 33. When the consumable 30 is physically coupled to the body 10 as shown in Fig. 3a, only the cap 31 and window 33 can be seen, with the tank 32 being obscured from view by the body 10. The body 10 includes a slot 15 to accommodate the window 33. The window 33 is configured to allow the amount of liquid precursor 6 in the tank 32 to be visually assessed, even when the consumable 30 is physically coupled to the body 10.

Fig. 4 shows an implementation of the apparatus 1 of Fig. 1, where the aerosol generating apparatus 1 is configured to generate aerosol by a-heat not-burn process.

In this example, the apparatus 1 includes a device body 50 and a consumable 70.

In this example, the body 50 includes the power supply 4 and a heating system 52. The heating system 54 includes at least one heating element 54. The body may additionally include any one or more of electrical circuitry 56, a memory 58, a wireless interface 60, one or more other components 62.

The electrical circuitry 56 may include a processing resource for controlling one or more operations of the body 50, e.g. based on instructions stored in the memory 58.

The wireless interface 60 may be configured to communicate wirelessly with an external (e.g. mobile) device, e.g. via Bluetooth.

The other component(s) 62 may include an actuator, one or more user interface devices configured to convey information to a user and/or a charging port, for example (see e.g. Fig. 5).

The body 50 is configured to engage with the consumable 70 such that the at least one heating element 54 of the heating system 52 penetrates into the solid precursor 6 of the consumable. In use, a user may activate the aerosol generating apparatus 1 to cause the heating system 52 of the body 50 to cause the at least one heating element 54 to heat the solid precursor 6 of the consumable (without combusting it) by conductive heat transfer, to generate an aerosol which is inhaled by the user.

Fig. 5 shows an example implementation of the aerosol generating device 1 of Fig. 2.

As depicted in Fig. 5, the consumable 70 is implemented as a stick, which is engaged with the body 50 by inserting the stick into an aperture at a top end 53 of the body 50, which causes the at least one heating element 54 of the heating system 52 to penetrate into the solid precursor 6.

The consumable 70 includes the solid precursor 6 proximal to the body 50, and a filter distal to the body 50. The filter serves as the mouthpiece of the consumable 70 and thus the apparatus 1 as a whole. The solid precursor 6 may be a reconstituted tobacco formulation.

In this example, the at least one heating element 54 is a rod-shaped element with a circular transverse profile. Other heating element shapes are possible, e.g. the at least one heating element may be blade-shaped (with a rectangular transverse profile) or tube-shaped (e.g. with a hollow transverse profile).

In this example, the body 50 includes a cap 51. In use the cap 51 is engaged at a top end 53 of the body 50. Although not apparent from Fig. 5, the cap 51 is moveable relative to the body 50. In particular, the cap 51 is slidable and can slide along a longitudinal axis of the body 50.

The body 50 also includes an actuator 55 on an outer surface of the body 50. In this example, the actuator 55 has the form of a button.

The body 50 also includes a user interface device configured to convey information to a user. Here, the user interface device is implemented as a plurality of lights 57, which may e.g. be configured to illuminate when the apparatus 1 is activated and/or to indicate a charging state of the power supply 4. Other user interface devices are possible, e.g. to convey information haptically or audibly to a user.

The body may also include an airflow sensor which detects airflow in the aerosol generating apparatus 1 (e.g. caused by a user inhaling through the consumable 70). This may be used to count puffs, for example.

In this example, the consumable 70 includes a flow path which transmits aerosol generated by the at least one heating element 54 to the mouthpiece of the consumable.

In this example, the aerosol generating unit 4 is provided by the above-described heating system 52 and the delivery system 8 is provided by the above-described flow path and mouthpiece of the consumable 70.

Fig. 6 shows an aerosol generation apparatus according to the present invention, which may be implemented in any of the preceding examples, comprising electrical circuitry 110, a heating system 104 including a heating element 106 which is configured to heat an aerosol precursor 108, and a power supply 102.

As described above for Fig. 2, the power supply 102 and the electrical circuitry 110 may be provided in a body of the aerosol generation apparatus and the heating system 104 and the aerosol precursor 108 may be provided in a consumable of the aerosol generation apparatus. In other examples, as described above with reference to Fig. 4, the aerosol generating apparatus may be configured to generate aerosol by a-heat not-burn process. In these examples, the power supply 102, the electrical circuitry 110, and the heating system 104 may be provided in the body and the aerosol precursor 108 may be provided in the consumable 70.

The heating element 106 is electrically resistive for producing heat from a flow of electrical current therethrough. In the examples described herein the heating element 106 has a positive TCR which means that as the temperature of the heating element 106 increases, the electrical resistance of the heating element 106 also increases. In other examples, the heating element 106 may have a negative TCR.

The power supply 102 (which may also be referred to as an electrical power source) is configured to supply electrical current to the heating element 106 for heating the aerosol precursor 108. As described above, the electrical power source 102 may be in the form of a battery and/or an electrical connection to an external power source. The electrical current provided to the heating element 106 from the power supply 102 may be unregulated. Specifically, the voltage (or the electrical current) provided to the heating element 106 may be provided directly to the heating element 106 without being adjusted by a voltage regulator. Therefore, the power supply 102 may provide a variable voltage to the heating element 106. For example the voltage provided to the heating element 106 may vary with a state of charge of the battery or with an age of the apparatus. For the avoidance of doubt, other electrical components in the aerosol generating apparatus, for example the processor 112, may be supplied with regulated or unregulated power from the power supply 102.

The aerosol precursor may include one or more of a: liquid; solid; gel; loose leaf material; or any other substance suitable for generating an aerosol.

The electrical circuitry 110 comprises a processor 112 connected to a memory 114. The memory 114 is configured to store a calibration temperature table 116. The calibration temperature table 116 may comprise one or more calibration values which correspond to a target temperature for the heating element 106. For example, as described below in more detail, the calibration values may include one or more of: a calibration voltage, a calibration current, a calibration power consumption of the heating element 106, or a calibration resistance of the heating element 106 which correspond to the target temperature.

The calibration temperature table 116 is preferably populated during a calibration stage wherein the calibration values corresponding to the target temperature are measured. Preferably, the calibration values are measured using a same aerosol generating apparatus. For example, to measure the calibration values, the heating element 106 may be heated to a predetermined calibration temperature which is measured using a temperature sensor, (e.g. a thermal camera). The calibration values may then be measured and stored in the calibration temperature table 116 which is then stored in the memory 114.

The processor 112 is configured to monitor an instant temperature of the heating element 106 using sense data received from the heating system 104 as part of a temperature control routine which is described in more detail below. The sense data includes a sample current through the heating element 106 and a sample voltage across the heating element 106.

Fig. 7 shows an example heating element 106 which may be implemented in the aerosol generation apparatus of the present invention. The heating element 106 is a heating rod 152 comprising a resistive heating track (not shown) which is configured to heat up when electrical current is flowing through the resistive heating track. Positive 156 and negative 154 input wires are provided to supply the electrical current through the heating element 106. In this example, the heating rod 152 includes a tapered end 158 which is distal to the input wires 154, 156 for facilitating the penetration of aerosol precursor by the heating rod 152.

Fig. 8 is a flowchart illustrating an example process for monitoring the temperature of a heating element 106. The process shown in Fig. 8 may be referred to as a temperature sampling routine which forms part of a temperature control routine performed by the processor 112 for controlling the heating element 106.

In the examples discussed herein, the processor 112 is configured to sample the temperature of the heating element 106 periodically at regular intervals. However, in some examples the processor may be configured to sample the temperature of the heating element 106 on demand (e.g., when the apparatus has been turned on for a predetermined amount of time).

In step S200 the processor receives a sample current through the heating element 106. At step S202 the processor receives a sample voltage across the heating element 106. The sample current and sample voltage are the present or instantaneous current and voltage at the current sampling time. (It should be noted that steps S200 and S202 may be performed simultaneously or in the opposite order to that shown in Fig. 8.)

At step S204 the processor 112 compares the sample current and the sample voltage to the calibration temperature table 116. Comparing the sample current and the sample voltage to the calibration temperature table 116 may be performed in a variety of ways, some of which are described below in relation to Figs. 9 and 10.

Finally, at step S206 the processor 112 determines from the comparison if the instant temperature of the heating element 106 is above or below a target temperature (i.e., if the temperature of the heating element 106 is higher than the target temperature then it is "over temperature"). If the heating element 106 is over temperature the processor may be configured to turn the heating element off or provide an indication to a user that the heating element is over temperature (e.g., by flashing an LED).

By comparing the sample current and the sample voltage to the calibration temperature table, a more accurate determination of whether the heating element has reached and/or exceeded the target temperature may be performed without directly measuring the temperature using separate temperature sensors.

Fig. 9 is a flowchart illustrating an example process for monitoring the temperature of a heating element wherein the sample current and the sample voltage are used to calculate a sample resistance of the heating element 106.

At step S300 the processor calculates a sample resistance of the heating element from the sample voltage and the sample current according to Ohm's law:

$$R_{sample} = \frac{V_{sample}}{I_{sample}}$$

At step S302 the processor retrieves a calibration resistance which corresponds to the target temperature from the calibration temperature table 116 and compares the sample resistance to the calibration resistance.

At step S304 the processor determines whether the sample resistance is higher than calibration resistance, and therefore if the heating element is over or under temperature. Owing to the heating element having a positive TCR, if the sample resistance is higher than the calibration resistance then the temperature of the heating element 106 is higher than the target temperature.

Fig. 10 is a flowchart illustrating an alternative process for monitoring the temperature of a heating element wherein the sample current and the sample voltage are used to calculate a sample power consumption of the heating element 106.

At step 400 the processor calculates a sample power consumption of the heating element 106 from the sample voltage and the sample current according to the power law:

$$P_{sample} = V_{sample} \times I_{sample}$$

In this example, the sample power consumption cannot be directly compared to a calibration power consumption in the calibration temperature table because the voltage provided to the heating element during calibration may be different to the sample voltage provided by the power supply 102 during use of the apparatus. As discussed above this is because the sample voltage may vary with a state of charge of the battery or due to other factors such as component age. Therefore, to account for the potentially variable voltage an adjusted calibration power is calculated in step S402 according to:

$$P_{adj} = V_{sample}{}^{2} \cdot \frac{P_{cal}}{V_{cal}{}^{2}}$$

wherein $P_{adj}$ is the adjusted calibration power, $P_{cal}$ is a calibration power corresponding to the target temperature which is retrieved by the processor 112 from the calibration temperature table 116, $V_{cal}$ is a voltage which was measured across the heating element 106 when the calibration power $P_{cal}$ was measured, and $V_{sample}$ is the sample voltage received from the heating element 106.

At step S404 the processor compares the adjusted calibration power consumption to the sample power consumption. At step S406 the processor determines whether the sample power is higher than the adjusted calibration power, and therefore if the heating element 106 is over or under temperature. Owing to the heating element 106 having a positive TCR, if the sample power consumption is higher than the adjusted calibration power then the temperature of the heating element 106 is lower than the target temperature. If the sample power consumption is lower than the adjusted calibration power, then the temperature of the heating element 106 is higher than the target temperature.

Fig. 11 is a flowchart illustrating an example process for controlling the temperature of the heating element 106. The process of Fig.11 forms a temperature control routine which is performed periodically by the processor 112 to maintain the temperature of the heating element 106 at or near to the target temperature.

The processor 112 is configured to perform the temperature control routine (i.e., as a task) repeatedly at regular intervals given by a predetermined sampling period. Preferably, the predetermined sampling period is shorter than a minimum time for the temperature of the heating element 106 to increase by 1°C when the electrical current is flowing therethrough. For example, the predetermined sampling period may be in the range 500us - 5ms which the present inventors have found is an optimal rate for maintaining the temperature of the heating element 106 at the target temperature.

At the beginning of a sampling period the processor 112 first determines, in step S500, if the heater which comprises the heating element 106 is switched on wherein electrical current is flowing through the heating element 106.

The power supply 102 may be connected to the heating system 104 via a switch which is controlled by the processor 112 via a control line. Therefore, determining if the heating element 106 is switched on may comprise checking a variable or flag which is set by the processor 112 for controlling the control line to determine if the heating element 106 is switched on. In other examples, the processor 112 may receive a sample current flowing through the heating element 106 to determine if the sample current is above zero. If the current is above zero then the heating element 106 may be determined as on.

If the heating element is not already switched on, then, at step S502, the processor 112 switches the heating element on (for example, by driving a control line to close a switch between the power supply 102 and the heating element 106).

At step S504 the processor waits for a predetermined settling time after switching on the heating element 106.

The predetermined settling time should be sufficient for the sample voltage and the sample current to settle to a steady state after the heating element has been turned on. For example, a current sense amplifier may be used to measure the sample current through the heating element 106 (this is described in more detail below with reference to Fig. 12). Therefore, predetermined settling time is ideally longer than an amplifier settling time of the current sense amplifier.

In addition, the predetermined settling time is ideally may be equal to or less than 40% of the predetermined sampling period to ensure that the delay in the temperature control routine owing to the predetermined settling time does not take up too much of each sampling period. Therefore, the remaining portion of the sampling period may be reserved for making adjustments to the heating element 106 or allowing the heating element 106 to cool.

The present inventors have found that a predetermined settling time of 100us and a sampling period of 1ms leads to accurate temperature control of the heating element.

If the processor 112 found that the heating element was already switched on at step S500 then steps S502 and S504 do not need to be performed. However, in some examples the processor 112 may still wait for the predetermined setting time so that the temperature of the heating element 106 may be sampled at the same point in each task.

After waiting for the predetermined settling time or determining that the heating element is already on, at steps S506 and S508, the processor 112 then performs the temperature sampling routine discussed above in relation to Fig. 8 to sample the instant temperature of the heating element 106 and determine if the heating element 106 is over temperature. i.e., the processor 112 receives a sample current through the heating element 106 and a sample voltage across the heating element 106; compares the sample voltage and the sample current to a calibration temperature table 116; and determines from the comparison if the instant temperature of the heating element 106 is higher or lower than a target temperature.

If the temperature of the heating element 106 is not higher than the target temperature, then the processor 112 exits the current task without disabling the electrical current to the heating element 106. Therefore, the heating element 106 can continue to heat up to the target temperature.

If the temperature of the heating element 106 is higher than the target temperature, then at step S510, the processor 112 switches the heating element 106 off before exiting the current task so that the heating element 106 can cool down towards the target temperature.

At step S512, the processor waits until the end of the current (present) sampling period before beginning the control routine again.

Fig. 12 is a schematic diagram of an example circuit for monitoring the temperature of the heating element 106 in an aerosol generating apparatus according to at least one aspect of the present invention.

The circuit comprises positive and negative terminals 612a, 612b for supplying electrical current to a heating element 106, a processor 600 configured to perform the temperature control routine for controlling the temperature of the heating element 106, and a power supply 602 for supplying the electrical current to the heating element 106.

A first switch 604 is provided between the power supply 602 and the positive terminal 612a of the heating element. A second switch 606 is provided between the negative terminal 612b of the heating element 106 and electrical ground (GND). By opening and closing the first 604 and second 606 switches the heating element may be switched off and on by enabling and disabling the flow of electrical current from the power supply 602 to the heating element. The first 604 and second 606 switches may be transistors (e.g., FETs, BJTs, etc) or other types of switches such as relays or solenoids which are suitable for transmitting electrical current to the heating element 106.

The first 604 and second 606 switches are controlled by the processor 600 via respective control lines. In some examples the first 604 and second 606 switches may be controlled by the same control line to ensure that the first 604 and second 606 switches switch at the same time (or as close to the same time as practicable, accounting for component and signal routing differences). In this way, the processor is configured to enable and disable the supply of electrical current to the heating element 106 and therefore switch the heating element 106 "on" and "off".

By providing two switches 604, 606, the aerosol generation apparatus has a level of redundancy which protects the apparatus from over-heating if one of the switches fails in an "on" state. In this case the other of the two switches can be used to switch the heating element 106 off and avoid potentially hazardous over-heating. In some examples, it is possible for the apparatus to comprise only one switch for switching the heating element 106 off and on to save space and reduce the system complexity.

A current sense amplifier 608 is provided for measuring the sample current through the heating element 106. The current sense amplifier 608 is a differential amplifier configured to amplify a voltage drop across a sense resistor 610 which is provided in series with the heating element 106 between the power supply 602 and the positive terminal 612a of the heating element 106. The current sense resistor 610 has a small electrical resistance between 100mΩ and 1Ω to minimise power consumption of the sense resistor 610 . In some examples the current sense resistor 610 may be included in a same package as the current sense amplifier 608 or provided as a separate component to the current sense amplifier 608.

The voltage drop across the sense resistor 610 which is amplified by the current sense amplifier 608 is then converted by a first ADC 616 into a digital signal to be received by the processor 600. This digital signal represents the sample current through the heating element 106.

Current sense amplifiers typically have an amplifier settling time which determines the response time of the amplifier to a step change in the electrical current which they are measuring. Preferably, the current sense amplifier has a settling time which is less than 40% of the sampling period of the temperature control routine. The present inventors have found that using a current sense amplifier with a settling time under 100us is useful for maintaining accurate temperature control of the heating element.

A second ADC 618 is provided to convert the voltage, measured between the positive terminal 612a of the heating element and electrical ground GND, into a second digital signal as an input to the processor 600. In this example, a voltage divider 614 is provided to scale the voltage at the positive terminal 612a of the heating element to a voltage which is compatible with the inputs of the second ADC 618.

The first 616 and second 618 ADCs may be provided as separate components. In other examples, the processor may include ADCs which are built into the same package as the processor 600. Therefore, analogue voltages from the terminals 612a, 612b of the heating element 106 and/or from the current sense amplifier 608 may be provided directly to input pins of the processor 600.

Accordingly, by performing the temperature control routine described herein with reference to Figs. 8-11, and by switching the heating element 106 off and on using the first 604 and second 606 switches, the processor 600 can maintain the temperature of the heating element at a desired temperature for generating an aerosol.

## Claims

1. An aerosol generation apparatus comprising:

    a heating element configured to heat an aerosol precursor wherein the heating element is configured to produce heat from a flow of electrical current therethrough,
    an electrical power source for supplying the electrical current to the heating element, wherein the electrical power source is connected to the heating element via a switch,
    a processor configured to enable and disable the supply of the electrical current to the heating element by providing a control signal to the switch;
    wherein the processor is configured to perform a temperature control routine comprising:

        enabling the supply of the electrical current from the electrical power source to the heating element such that the electrical current flows through the heating element,
        waiting for a predetermined settling time,
        receiving a sample current through the heating element and a sample voltage across the heating element, and
        determining an instant temperature of the heating element from the sample current and the sample voltage.

2. The aerosol generation apparatus of claim 1 wherein the predetermined settling time is at least 100us.

3. The aerosol generation apparatus of claims 1 or 2 wherein the processor is configured to perform the temperature control routine periodically at regular intervals, wherein the regular intervals have a length defined by a predetermined sampling period.

4. The aerosol generation apparatus of claim 3 wherein the predetermined settling time is less than 40% of the predetermined sampling period.

5. The aerosol generation apparatus of claims 3 or 4 wherein the predetermined sampling period is between 500us - 5ms.

**6.** The aerosol generation apparatus of any of claims 3 to 5 wherein the predetermined sampling period is shorter than a minimum time for the instant temperature of the heating element to increase by 1°C when the electrical current is flowing therethrough.

**7.** The aerosol generation apparatus of claim 6 wherein the predetermined sampling period is less than 25% of the minimum time for the instant temperature of the heating element to increase by 1 °C when the electrical current is flowing therethrough.

**8.** The aerosol generation apparatus of any of claims 6 or 7 wherein the minimum time for the instant temperature of the heating element to increase by 1 °C is between 5ms and 30ms.

**9.** The aerosol generation apparatus of any preceding claim further comprising a current sense amplifier for measuring the sample current and an ADC for converting the measured sample current to a digital representation of the sample current,
wherein receiving the sample current includes receiving the digital representation of the sample current from the ADC.

**10.** The aerosol generation apparatus of claim 9 wherein the current sense amplifier has an amplifier settling time which is shorter than the predetermined settling time,
wherein the predetermined settling time is at least 10% longer than the amplifier settling time.

**11.** The aerosol generation apparatus of any preceding claim wherein the temperature control routine comprises disabling the supply of the electrical current to the heating element if the instant temperature is above a target temperature.

**12.** The aerosol generation apparatus of any preceding claim wherein the temperature control routine comprises:

first determining if the supply of electrical current to the heating element is already enabled or already disabled before enabling the supply of the electrical current to the heating element, and
if the supply of electrical current to the heating element is already enabled, omitting the enabling of the supply of the electrical current to the heating element and omitting the waiting for the predetermined settling time.

**13.** A method of controlling temperature of a heating element in an aerosol generation apparatus according to any preceding claim, the method comprising:

enabling a supply of electrical current from an electrical power source to the heating element such that the electrical current flows through the heating element,
waiting for a predetermined settling time,
receiving a sample current through the heating element and a sample voltage across the heating element, and
determining an instant temperature of the heating element from the sample current and the sample voltage.

**14.** A computer readable memory comprising instructions which when executed perform the method of claim 13.

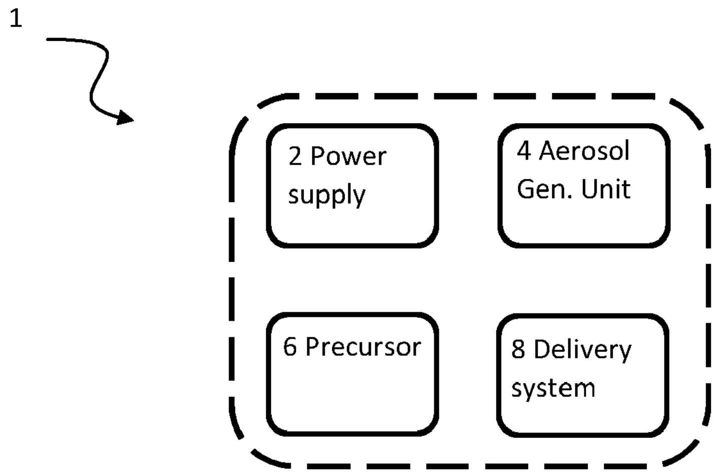
1
2 Power supply
4 Aerosol Gen. Unit
6 Precursor
8 Delivery system

Fig. 1

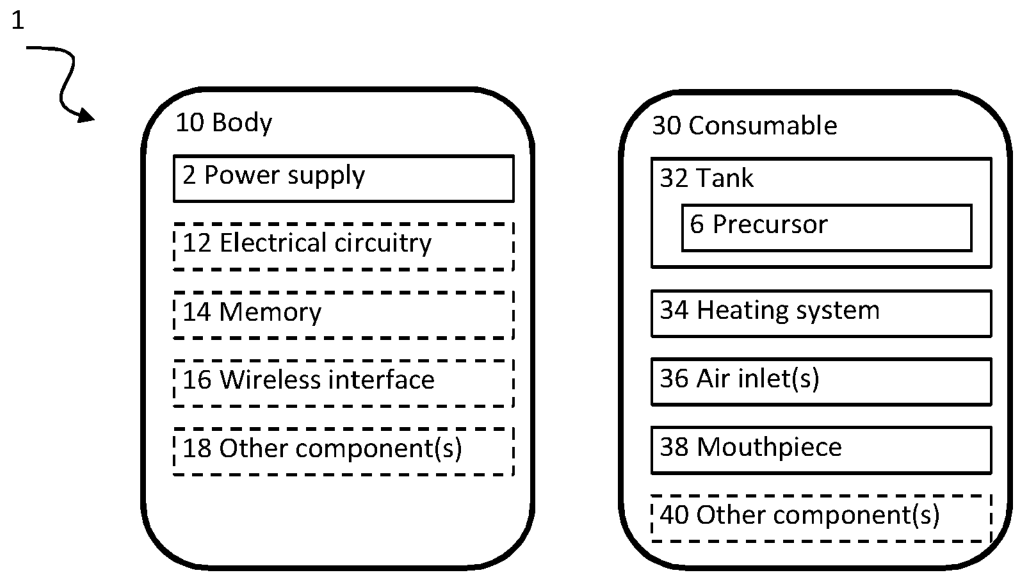


Fig. 2

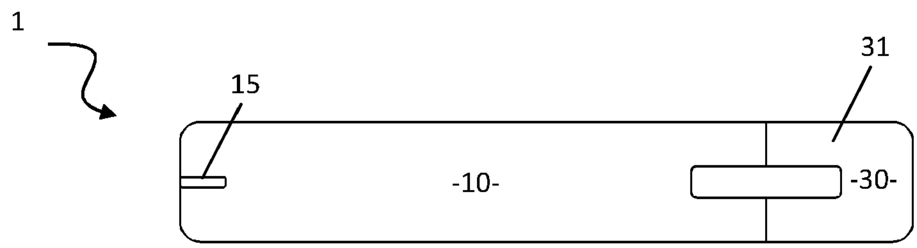


Fig. 3a

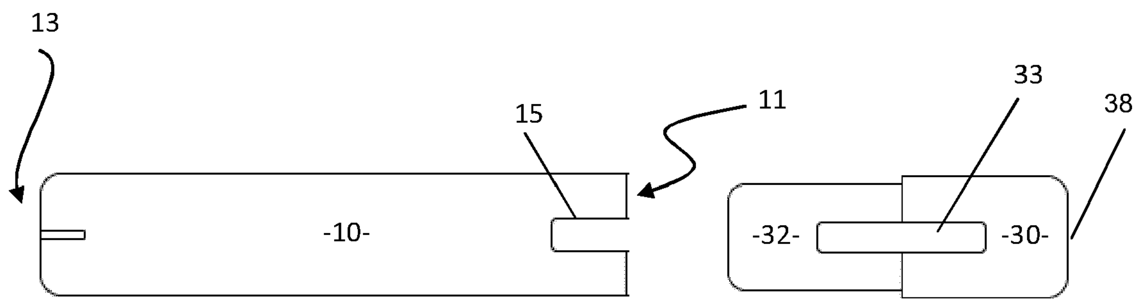


Fig. 3b

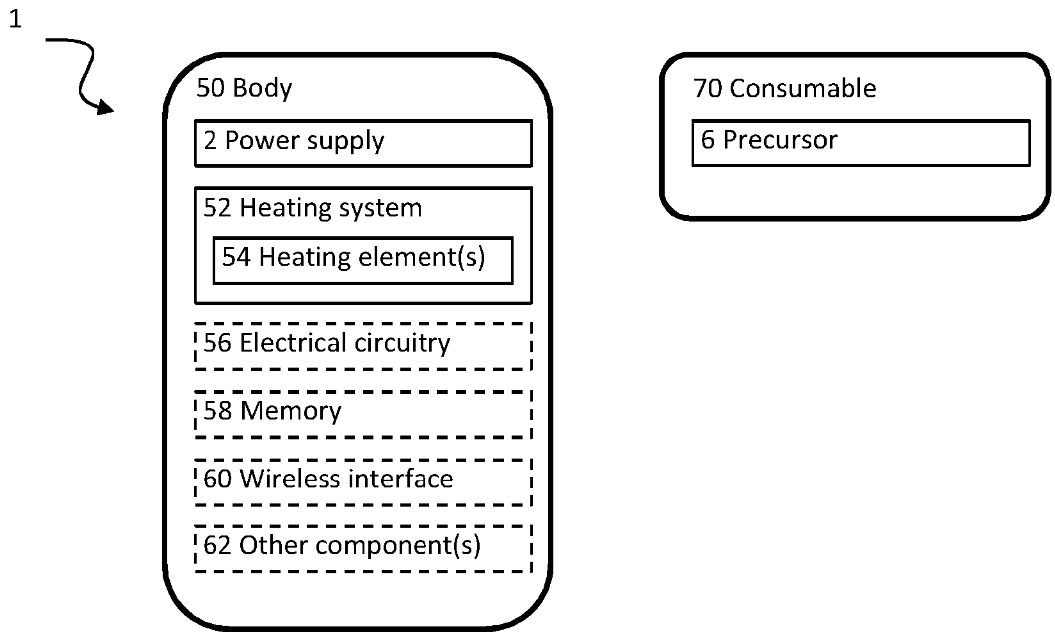
1
50 Body
2 Power supply
52 Heating system
54 Heating element(s)
56 Electrical circuitry
58 Memory
60 Wireless interface
62 Other component(s)
70 Consumable
6 Precursor

Fig. 4

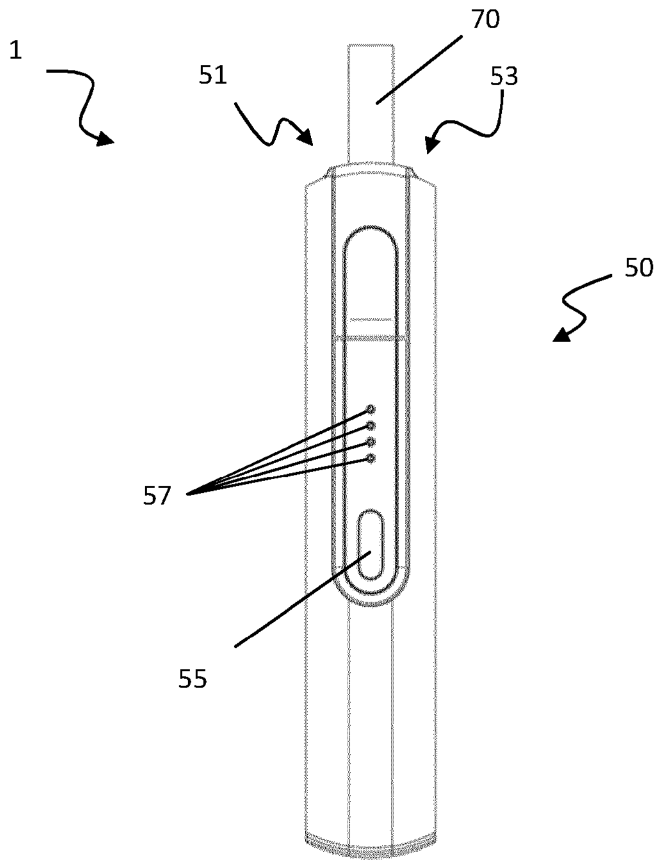
1
51
70
53
50
57
55

Fig. 5

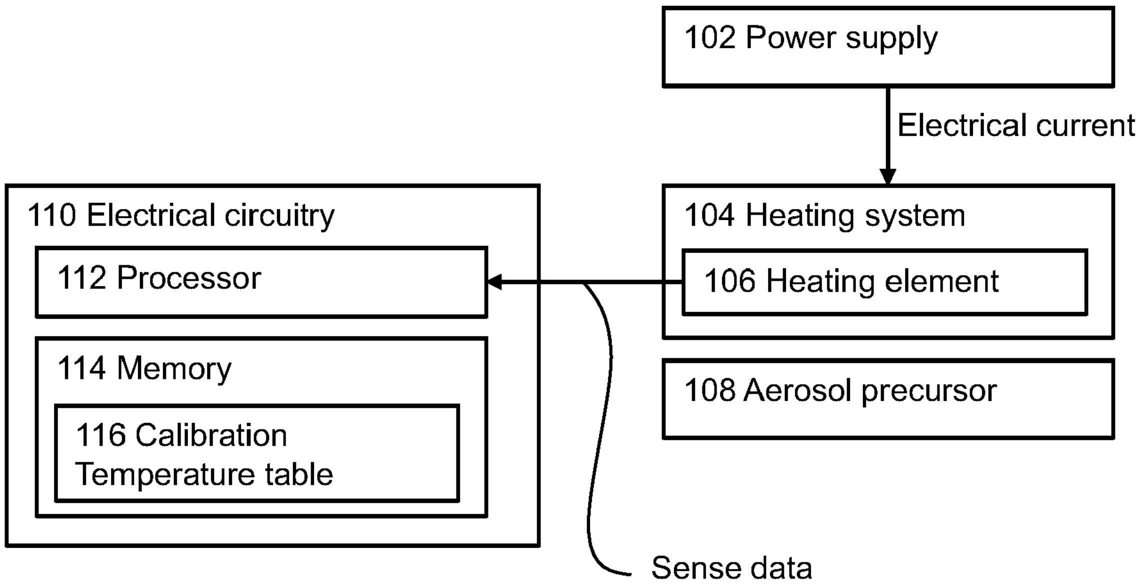
102 Power supply
Electrical current
110 Electrical circuitry
112 Processor
114 Memory
116 Calibration
Temperature table
104 Heating system
106 Heating element
108 Aerosol precursor
Sense data

Fig. 6

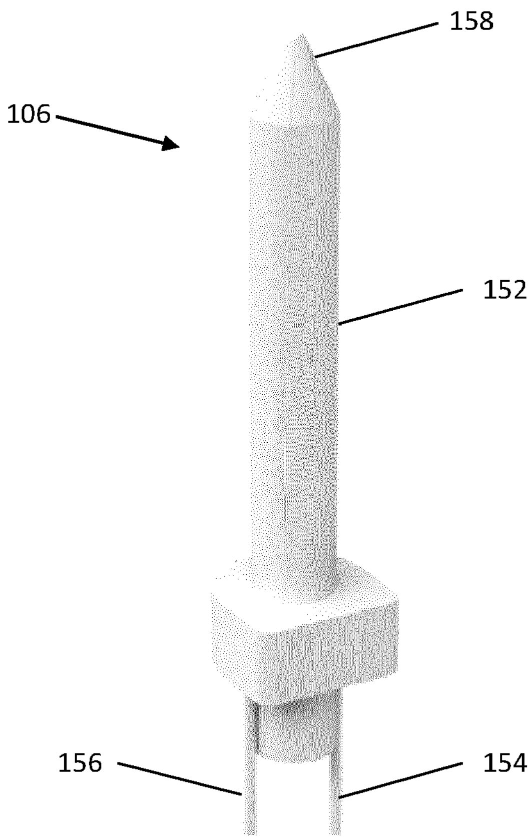


Fig. 7

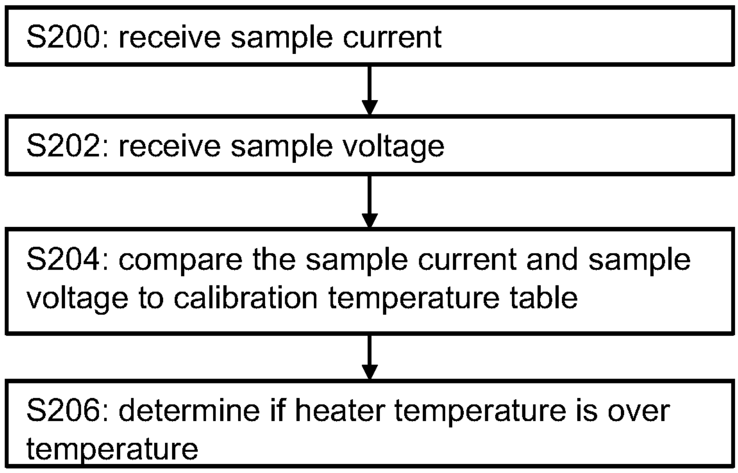
S200: receive sample current
S202: receive sample voltage
S204: compare the sample current and sample voltage to calibration temperature table
S206: determine if heater temperature is over temperature

Fig. 8

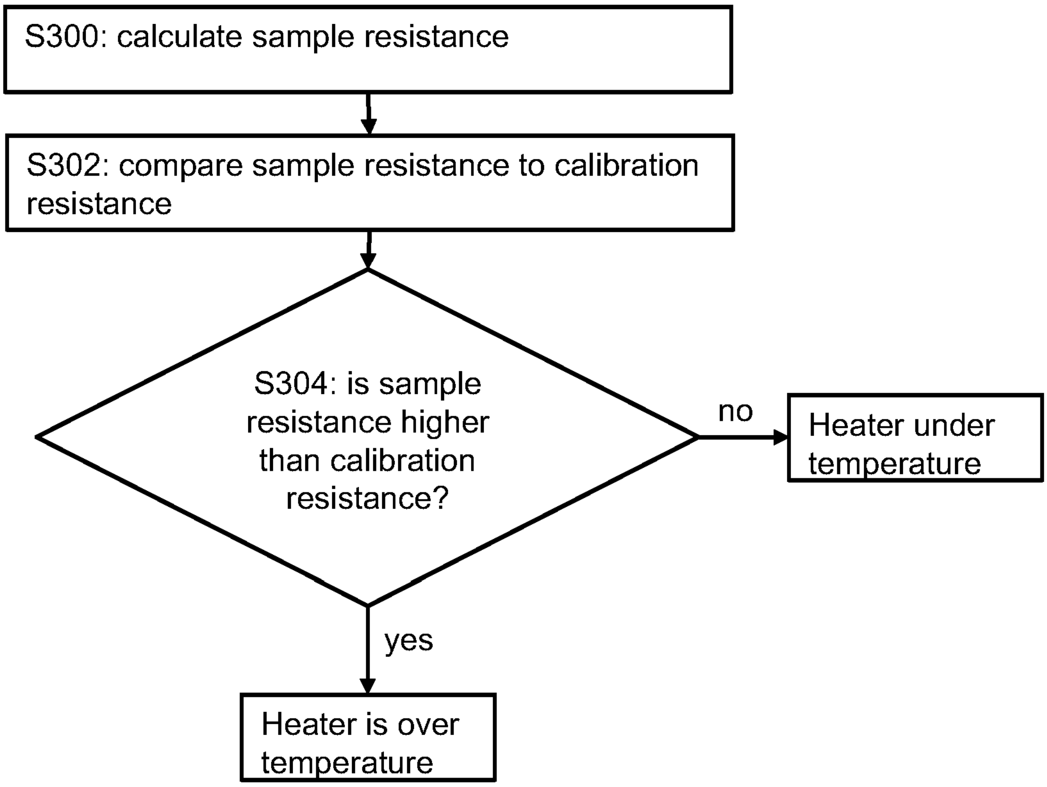
S300: calculate sample resistance
S302: compare sample resistance to calibration resistance
S304: is sample resistance higher than calibration resistance?
no
Heater under temperature
yes
Heater is over temperature

Fig. 9

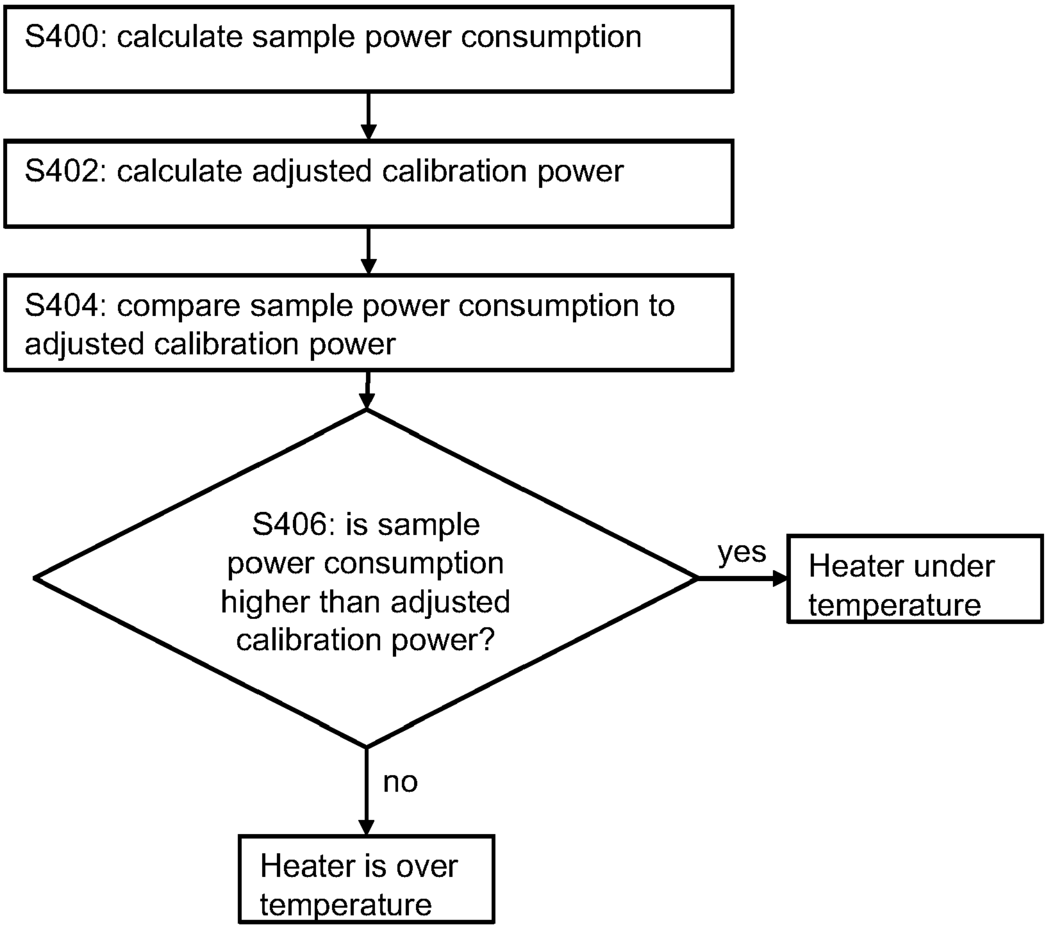
S400: calculate sample power consumption
S402: calculate adjusted calibration power
S404: compare sample power consumption to adjusted calibration power
S406: is sample power consumption higher than adjusted calibration power?
yes
Heater under temperature
no
Heater is over temperature

Fig. 10

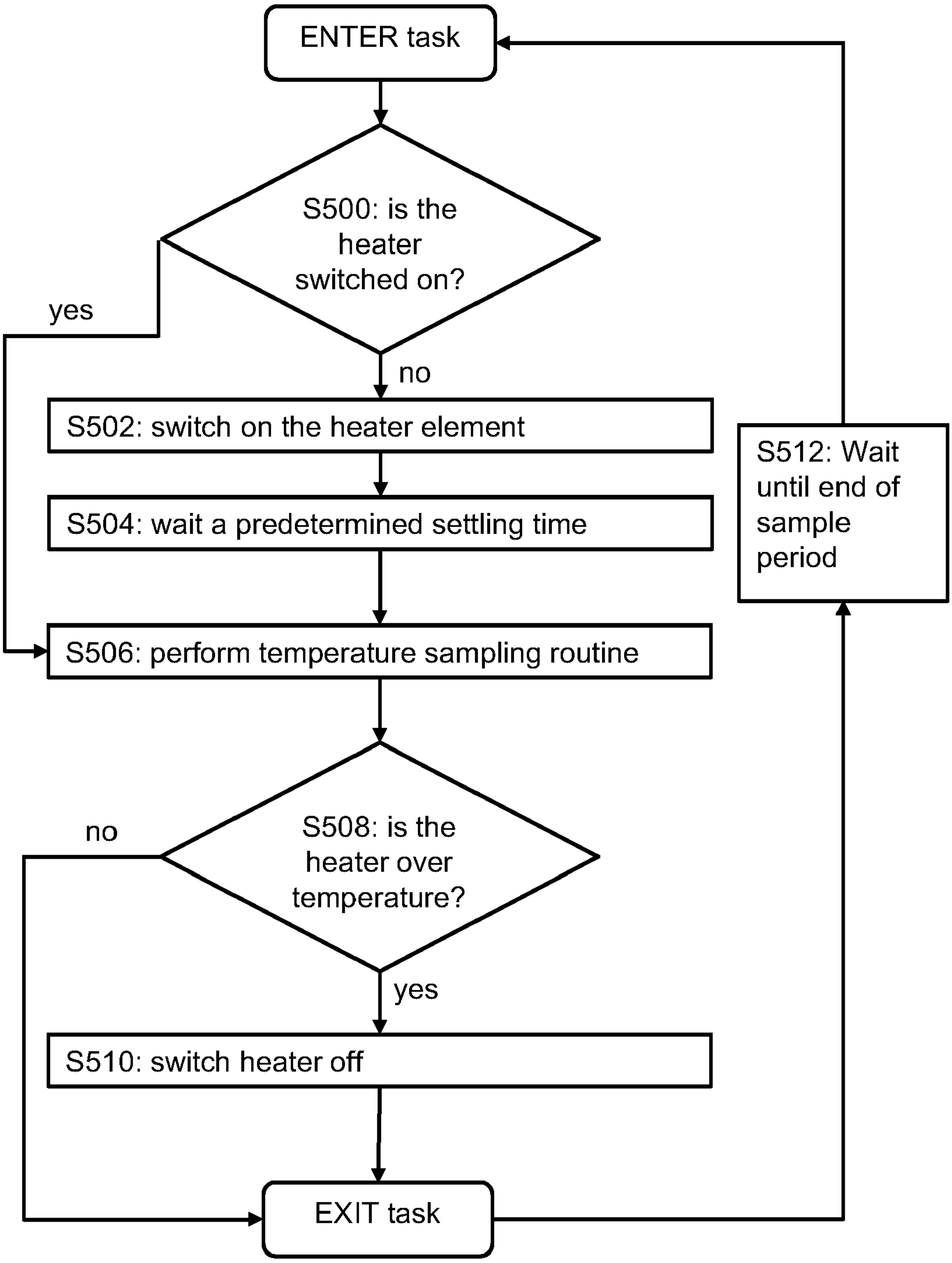
ENTER task
S500: is the heater switched on?
yes
no
S502: switch on the heater element
S504: wait a predetermined settling time
S506: perform temperature sampling routine
S508: is the heater over temperature?
no
yes
S510: switch heater off
EXIT task
S512: Wait until end of sample period

Fig. 11

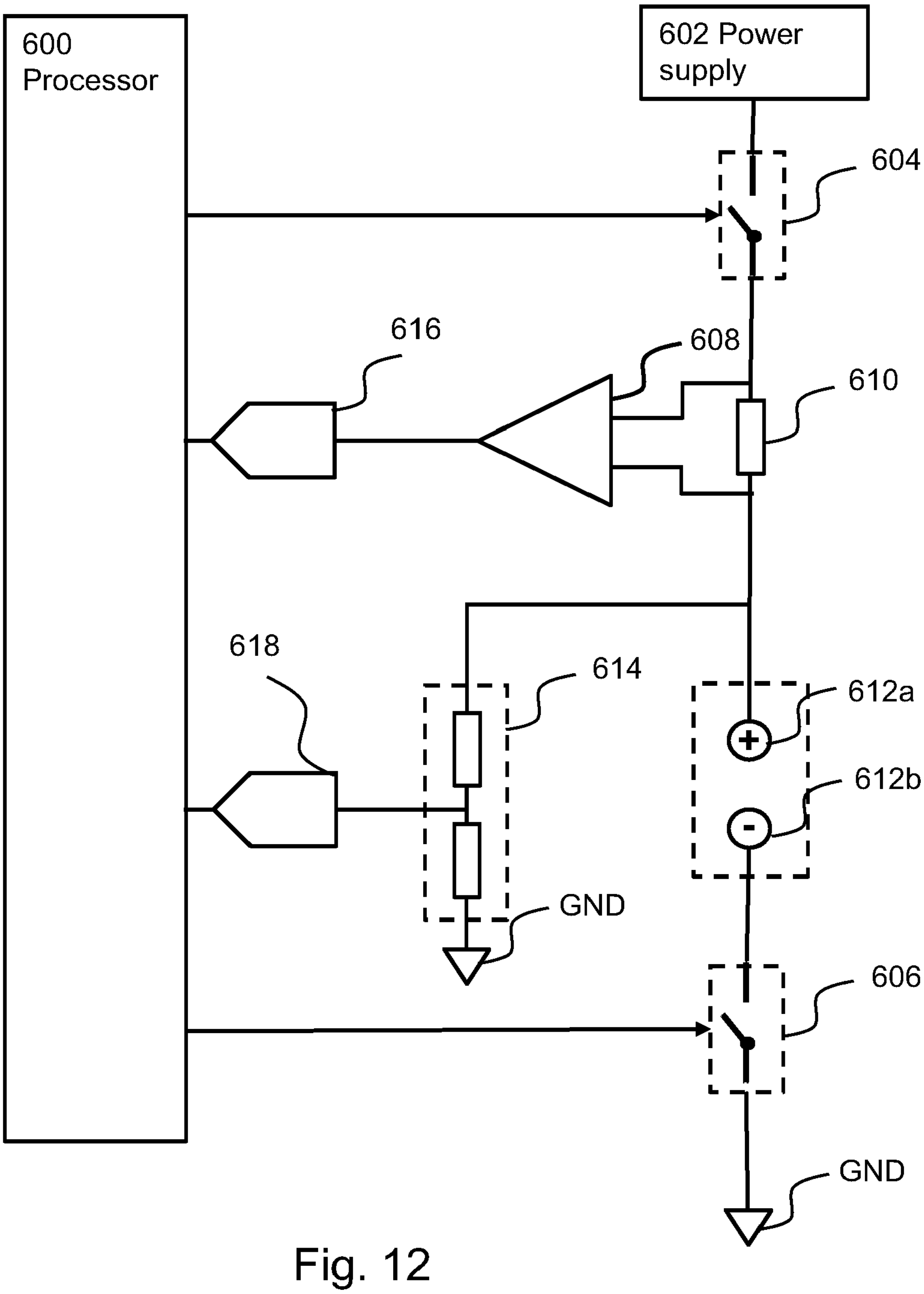
600
Processor
602 Power
supply
604
616
608
610
618
614
612a
612b
GND
606
GND

Fig. 12

Europäisches Patentamt
European Patent Office
Office européen des brevets

# EUROPEAN SEARCH REPORT

Application Number
EP 23 15 3134

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/278707 A1 (SUR RAJESH [US]) 3 September 2020 (2020-09-03) * paragraph [0118] - paragraph [0139]; figures 7-9 * * paragraph [0058] * ----- | 1-14 | INV. A24F40/57 G05D23/24 |
| X | US 2021/259323 A1 (MARUBASHI KEIJI [JP] ET AL) 26 August 2021 (2021-08-26) * paragraph [0079]; figure 5 * ----- | 1-14 | |
| X | US 2015/359263 A1 (BELLINGER JOHN [US]) 17 December 2015 (2015-12-17) * paragraph [0039]; figures 2,7 * ----- | 1-14 | |
| A | US 2021/274853 A1 (MARUBASHI KEIJI [JP] ET AL) 9 September 2021 (2021-09-09) * paragraph [0084]; figure 7 * ----- | 1-14 | |

TECHNICAL FIELDS SEARCHED (IPC)

A24F
G05D

The present search report has been drawn up for all claims

3

| Place of search | Date of completion of the search | Examiner |
|---|---|---|
| Munich | 6 July 2023 | Dobbs, Harvey |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 15 3134

This annex lists the patent family members relating to the patent documents cited in the above-mentioned European search report. The members are as contained in the European Patent Office EDP file on The European Patent Office is in no way liable for these particulars which are merely given for the purpose of information.

06-07-2023

| Patent document cited in search report | Publication date | Patent family member(s) | Publication date |
|---|---|---|---|
| US 2020278707 A1 | 03-09-2020 | CA 3130556 A1 | 10-09-2020 |
| | | EP 3931659 A1 | 05-01-2022 |
| | | JP 2022522365 A | 18-04-2022 |
| | | KR 20210134361 A | 09-11-2021 |
| | | US 2020278707 A1 | 03-09-2020 |
| | | WO 2020178671 A1 | 10-09-2020 |
| US 2021259323 A1 | 26-08-2021 | CN 113303520 A | 27-08-2021 |
| | | EP 3871517 A1 | 01-09-2021 |
| | | JP 6888138 B1 | 16-06-2021 |
| | | JP 2021132552 A | 13-09-2021 |
| | | KR 20210108337 A | 02-09-2021 |
| | | US 2021259323 A1 | 26-08-2021 |
| US 2015359263 A1 | 17-12-2015 | CN 106455718 A | 22-02-2017 |
| | | EP 3154382 A1 | 19-04-2017 |
| | | EP 3984394 A1 | 20-04-2022 |
| | | US 2015359263 A1 | 17-12-2015 |
| | | WO 2015192084 A1 | 17-12-2015 |
| US 2021274853 A1 | 09-09-2021 | CN 113349464 A | 07-09-2021 |
| | | EP 3874974 A1 | 08-09-2021 |
| | | JP 6899012 B1 | 07-07-2021 |
| | | JP 2021136941 A | 16-09-2021 |
| | | RU 2753877 C1 | 24-08-2021 |
| | | US 2021274853 A1 | 09-09-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3711569 A